(19) Europäisches Patentamt
European Patent Office
Office européen des brevets

(11) EP 1 847 560 A1

(12) EUROPEAN PATENT APPLICATION
published in accordance with Art. 158(3) EPC

(43) Date of publication:
**24.10.2007 Bulletin 2007/43**

(21) Application number: **06713417.1**

(22) Date of filing: **09.02.2006**

(51) Int Cl.:
***C08J 3/14*** *(2006.01)*

(86) International application number:
**PCT/JP2006/302274**

(87) International publication number:
**WO 2006/085596 (17.08.2006 Gazette 2006/33)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.02.2005 JP 2005035056**
**25.02.2005 JP 2005051164**

(71) Applicant: **Kaneka Corporation**
**Kita-ku**
**Osaka-shi, Osaka 530-8288 (JP)**

(72) Inventors:
- **KYOTANI, Susumu**
**gocho Miyamaecho, Takasago-shi, Hyogo 6768688 (JP)**
- **FURUKAWA, Naoki**
**gocho Miyamaecho, Takasago-shi, Hyogo 6768688 (JP)**
- **CHIBA, Takeshi**
**Settsu-shi, Osaka 5660072 (JP)**

(74) Representative: **Vossius & Partner**
**Siebertstrasse 4**
**81675 München (DE)**

# (54) PROCESS FOR PRODUCING SPHERICAL POLYMER POWDER AND SPHERICAL POWDER COMPRISING (METH)ACRYLIC BLOCK COPOLYMER

(57) The present invention has its object to provide a process for producing spherical polymer powders by which polymer particles close to nearly spheres in shape and small in particle diameter and therefore suited for use as a molding material can be obtained in a simple and easy manner. Furthermore, the present invention also has its object to provide a spherical polymer powder which is excellent in powder flowability and is safe and can form high-quality moldings, coverings, coatings and like products excellent in weather resistance, flexibility, rubber elasticity, low-temperature characteristics, adhesion to polar resins, touch and feel and appearance, among others. The present invention relates to a process for producing spherical polymer powders, which comprises the step of heating an aqueous dispersion comprising a solution of a polymer dissolved in a solvent, water and a dispersant with stirring under conditions such that the power per unit volume of the dispersion, P/V, amounts to at least 0.2 $kW/m^3$ to thereby remove the solvent from the aqueous dispersion, and a spherical powder comprising a (meth)acrylic block copolymer.

EP 1 847 560 A1

## Description

TECHNICAL FIELD

The present invention relates to a process for producing a spherical polymer powder. The invention further relates to a spherical powder comprising a (meth) acrylic block copolymer.

BACKGROUND ART

Polymer powder particles are industrially used as materials for manufacturing moldings by die-molding and other molding techniques. In die molding, desired moldings can be obtained by a process comprising filling a desired die or mold with polymer powder particles and, then, melting the resin, followed by cooling for hardening.

In recent years, the number of those moldings having a fine and complicated structure among moldings manufactured by such die molding has also been increasing. For manufacturing moldings having such a fine structure, it is necessary to fill the mold with the powder material so that the material may be found in every corner of the mold with a complicated shape as well. Therefore, the powder to be used is required to be excellent in flowability, small in particle diameter and uniform in powder morphology, among others.

Among the conventional molding powder materials, styrenic polymer powders are described, for example, in Patent Documents 1 to 5. Further, Patent Document 6 describes vinyl chloride-based resin powders and, in Patent Documents 7 to 12, there are described urethane type resin powders. Furthermore, Patent Document 13 describes that isobutylene powders can be obtained, and Patent Document 14 describes that acrylic-methacrylic block copolymer powders can be obtained.

However, the prior art polymer powders are unsuitable as molding materials for obtaining moldings having a fine structure. For example, particles of a block copolymer consisting of a styrenic hydrocarbon and a conjugated diene as described in Patent Document 1 have a particle diameter as great as about 5 mm, hence cannot fill the mold in every terminal portion thereof; in particular, the shape of the mold in one or more terminal portions thereof cannot be completely transferred to the molded article in some instances.

In such cases where only particles relatively large in particle diameter can be obtained, the means so far taken comprises mechanically grinding the particles, classifying the ground mass by sieving, and using the powder passing through a proper sieve, as described in Patent Document 14. However, the mechanically ground particles are indefinite and distorted in morphology and therefore have such disadvantages as a tendency toward static electricity generation among powder particles and, further, their low flowability due to their morphology. Further, since those particles incapable of passing through the sieve cannot be utilized, the raw material utilization efficiency disadvantageously decreases. As for the production methods as well, such steps as the grinding step and sieving step are required, resulting in an increased number of steps, which in turn renders the methods unsuitable as industrial methods of producing powder particles from the production cost viewpoint.

As a measure capable of solving the flowability problem with such powder particles, a method of producing nearly spherical resin particles by passing a resin precursor through a porous body having small pores is described in Patent Document 15. However, for producing resin particles using different resin species on one and the same production apparatus, it is necessary to wash the porous body frequently every time of change of resin species and/or use a new porous body in order to prevent mutual contamination of resins with one another; this is inefficient. For the passage of the porous body, it is necessary for the solution to be low in viscosity and, therefore, such a measure as dilution of the polymer with a large quantity of a solvent is required and, in some instances, it is necessary to pass the solution through the porous body under pressure or reduced pressure, for instance; thus, a large-scale pressure apparatus is required for industrial utilization of the method, and there are still problems in industrial application of the method.

In some instances, an additive or additives such as a filler and so forth are added to resin particles according to the physical properties required and, generally, the additives are often dispersed in the resin by admixing them with the resin in a molten state. In this case, too, an apparatus for melting the resin and for admixture is required separately and this is disadvantageous from the equipment cost and running cost viewpoint. Therefore, if the process of dispersion of an additive(s), in particular a solid filler or the like, within resin particles and the process of polymer granulation can be carried out in one and the same step, the whole process will become advantageous as an industrial production method.

Thus, a process for obtaining polymer particles which are high in flowability and uniform in particle morphology and small in particle diameter in a small number of steps has been demanded. Further, a process for producing polymer particles which enables uniform dispersion of an additive(s) in a simple and easy manner has been desired.

Furthermore, a spherical polymer powder which is excellent in powder flowability and is safe and can form high-quality moldings, coverings, coatings and like products excellent in weather resistance, flexibility, rubber elasticity, low-temperature characteristics, adhesion to polar resins, touch and feel and appearance, among others, has been required.

Patent Document 1: Japanese Kokai Publication Sho49-53991

Patent Document 2: Japanese Kokai Publication Sho50-90693

Patent Document 3: Japanese Kokai Publication Sho50-89494

Patent Document 4: Japanese Kokai Publication Hei07-82433

Patent Document 5: Japanese Kokai Publication Hei10-30036

Patent Document 6: Japanese Kokai Publication Hei05-279485

Patent Document 7: Japanese Kokai Publication Hei07-133423

Patent Document 8: Japanese Kokai Publication Hei11-116796

Patent Document 9: Japanese Kokai Publication Hei11-256032

Patent Document 10: Japanese Kokai Publication Hei07-133423

Patent Document 11: Japanese Kokai Publication 2000-103957

Patent Document 12: Japanese Kokai Publication 2004-269815

Patent Document 13: Japanese Kokai Publication 2004-155880

Patent Document 14: WO 2004/041886

Patent Document 15: Japanese Kokai Publication 2000-297156

SUMMARY OF THE INVENTION

In view of the above-discussed state of the art, it is an object of the present invention, in a first aspect thereof, to provide a process for producing spherical polymer powders by which polymer particles close to nearly spheres in shape and small in particle diameter can be obtained in a simple and easy manner. In view of the above-mentioned state of the art, it is another object of the invention, in a second aspect thereof, to provide a spherical polymer powder which is excellent in powder flowability and is safe and can form high-quality moldings, coverings, coatings and like products excellent in weather resistance, flexibility, rubber elasticity, low-temperature characteristics, adhesion to polar resins, touch and feel and appearance, among others. In a first aspect, the present invention relates to a process for producing spherical polymer powders, which comprises the step of heating an aqueous dispersion comprising a solution of a polymer dissolved in a solvent, water and a dispersant with stirring under conditions such that the power per unit volume of the dispersion, P/V, amounts to at least 0.2 $kW/m^3$ to thereby remove the solvent from the aqueous dispersion.
In the process according to the invention, the temperature in the above-mentioned step of heating is preferably not lower than 70˚C but lower than 160˚C.
The above-mentioned heating is preferably carried out by blowing steam into the aqueous dispersion and the solvent is preferably removed from the aqueous dispersion in the manner of steam stripping.
Preferably, the process according to the invention further comprises the step of separating a spherical polymer powder from the aqueous dispersion containing the resulting spherical polymer powder by using the technique of filtration, centrifugation or sedimentation.
Furthermore, in the process according to the invention, at least one dispersant selected from the group consisting of methylcellulose, polyvinyl alcohol, calcium phosphate and calcium carbonate is preferably used as the dispersant.
The polymer preferably has a glass transition temperature of 30 to 150˚C.
The polymer is preferably a thermoplastic resin. More preferably, the thermoplastic resin is selected from among (meth)acrylic polymers, (meth) acrylic copolymers and isobutylene-based polymers.
The polymer solution preferably contains inorganic particles.
The spherical polymer powder obtained by the process according to the invention is preferably such that at least 90% of the total number of powder particles have an aspect ratio, expressed as the ratio between the small diameter and large diameter of each particle, of 1 to 2 and the average particle diameter is not smaller than 1 μm but smaller

than 1,000 μm.

The spherical polymer powder obtained by the process according to the invention preferably has, on the particle surface thereof, small pores with an inside diameter corresponding to 1 to 50% of the particle diameter.

In a second aspect, the invention relates to a spherical powder comprising a (meth) acrylic block copolymer.

The (meth)acrylic block copolymer is preferably a (meth) acrylic block copolymer (A) comprising a methacrylic polymer block (a) and an acrylic polymer block (b).

The spherical powder is preferably such that at least 90% of the total number of powder particles have an aspect ratio, expressed as the ratio between the small diameter and large diameter of each particle, of 1 to 2 and the average particle diameter is not smaller than 1μm but smaller than 1,000 μm.

The above spherical powder preferably has, on the particle surface thereof, small pores with an inside diameter corresponding to 1 to 50% of the particle diameter.

Preferably, the spherical powder further contains a filler and/or an additive.

## DETAILED DESCRIPTION OF THE INVENTION

In the following, the invention is described in detail.

(First Aspect of the Invention)

In the first aspect, the invention relates to a process for producing spherical polymer powders, which comprises the step of heating an aqueous dispersion comprising a solution of a polymer dissolved in a solvent, water and a dispersant with stirring under conditions such that the power per unit volume of the dispersion, P/V, amounts to at least 0.2 $kW/m^3$ to thereby remove the solvent from the aqueous dispersion.

The raw material polymer to be used in the process for producing spherical polymer powders according to the invention is not particularly restricted but may be any of those soluble in a solvent and undergoing no hardening by heating; thus, various thermoplastic resins can be used. As the thermoplastic resins, there may be mentioned, among others, olefinic polymers such as polyethylene, polypropylene, polybutene, polymethylpentene and norbornene-based resins, polystyrene, styrene-maleic anhydride copolymers and like vinyl polymers, (meth) acrylic polymers and copolymers such as acrylic polymers, methacrylic polymers, acrylic polymers, methacrylic polymers, acrylic copolymers, methacrylic copolymers and (meth)acrylate-styrene copolymers, acrylonitrile-styrene copolymer resins (AS resins), polycarbonates, polyarylates, polyvinyl chloride, polyvinylidene chloride, polyvinyl alcohol, modified polyphenylene ethers, polyamides, polyamideimides, polyacetals, polyesters, isobutylene-based polymers, styrene-(ethylene-propylene)-styrene copolymers (SEPS), styrene-(ethylene-butylene)-styrene copolymers (SEBS), styrene-isoprene-styrene copolymers (SIS) and like styrene copolymers and, further, acrylic rubbers, silicone rubbers, isoprene rubbers (IR), ethylene-propylene rubbers (EPR, EPDM) and like uncured rubbers. Among the thermoplastic resins mentioned above, olefinic resins, vinyl polymers, (meth) acrylic polymers or (meth) acrylic copolymers, AS resins, polycarbonates, polyvinyl chloride, polyvinylidene chloride, polyvinyl alcohol, modified polyphenylene ethers, isobutylene-based polymers, styrene copolymers and uncured rubbers are preferred in view of their good thermal stability, moldability, impact resistance and other physical properties, and (meth)acrylic polymers (meth)acrylic copolymers and isobutylene-based polymers are particularly preferred in view of their good physical properties after molding. In the present specification, "(meth)acrylic" means acrylic and/or methacrylic.

The polymer to be used in the practice of the invention preferably has a glass transition temperature of 30 to 150˚C. On the occasion of molding, it is necessary for the powder or the fluid resulting from melting of the powder to flow sufficiently so that the resin may reach every end portion of the mold. If, however, the glass transition temperature $T_g$ is excessively high, the melt viscosity will become high and the flowability of the molten fluid tends to become poor. On the other hand, if the glass transition temperature $T_g$ is too low, the spherical polymer powder may show flowability, hence cannot maintain the powder form, even at ordinary temperature, namely at around 25˚C. The glass transition temperature is preferably 50 to 130˚C, more preferably 70 to 100˚C.

In the practice of the invention, the glass transition temperature (Tg) can be measured by DSC (differential scanning calorimetry) or based on the dynamic viscoelasticity tanδ peak.

As the monomers constituting the above-mentioned (meth) acrylic polymers or (meth) acrylic copolymers preferably usable in the practice of the invention, there may be mentioned the following. As acrylate esters, there may be mentioned, among others, aliphatic hydrocarbon (e.g. alkyl containing 1 to 20 carbon atoms, preferably 1 to 10 carbon atoms) esters of acrylic acid, for example methyl acrylate, ethyl acrylate, n-propyl acrylate, n-butyl acrylate, isobutyl acrylate, n-pentyl acrylate, n-hexyl acrylate, n-heptyl acrylate, n-octyl acrylate, 2-ethylhexyl acrylate, nonyl acrylate, decyl acrylate, dodecyl acrylate and stearyl acrylate; alicyclic hydrocarbon esters of acrylic acid, for example cyclohexyl acrylate and isobornyl acrylate; aromatic hydrocarbon esters of acrylic acid, for example phenyl acrylate and tolyl acrylate; aralkyl esters of acrylic acid, for example benzyl acrylate; esters of acrylic acid with alcohols containing an ether oxygen-containing functional group, for example 2-methoxyethyl acrylate and 3-methoxybutyl acrylate; and fluoroalkyl esters of acrylic acid, for example trifluoromethylmethyl acrylate, 2-trifluoromethylethyl acrylate, 2-perfluoroethylethyl acrylate, 2-perfluoroethyl-2-perfluorobutylethyl acrylate, 2-perfluoroethyl acrylate, perfluoromethyl acrylate, diperfluoromethylmethyl acrylate, 2-perfluoromethyl-2-perfluoroethylmethyl acrylate, 2-perfluorohexylethyl acrylate, 2-perfluorodecylethyl acrylate and 2-perfluorohexadecylethyl acrylate.

As methacrylate esters, there may be mentioned, among others, aliphatic hydrocarbon (e.g. alkyl containing 1 to 20 carbon atoms, preferably 1 to 10 carbon atoms) esters of methacrylic acid, for example methyl methacrylate, ethyl methacrylate, n-propyl methacrylate, n-butyl methacrylate, isobutyl methacrylate, n-pentyl methacrylate, n-hexyl methacrylate, n-heptyl methacrylate, n-octyl methacrylate, 2-ethylhexyl methacrylate, nonyl methacrylate, decyl methacrylate, dodecyl methacrylate and stearyl methacrylate; alicyclic hydrocarbon esters of methacrylic acid, for example cyclohexyl methacrylate and isobornyl methacrylate; aralkyl esters of methacrylic acid, for example benzyl methacrylate; aromatic hydrocarbon esters of methacrylic acid, for example phenyl methacrylate and tolyl methacrylate; esters of methacrylic acid with alcohols containing an ether oxygen-containing functional group, for example 2-methoxyethyl methacrylate and 3-methoxybutyl methacrylate; and fluoroalkyl esters of methacrylic acid, for example trifluoromethyl methacrylate, 2-trifluoroethyl methacrylate, 2-perfluoroethylethyl methacrylate, 2-perfluoroethyl-2-perfluorobutylethyl methacrylate, 2-perfluoroethyl methacrylate, perfluoromethyl methacrylate, diperfluoromethylmethyl methacrylate, 2-perfluoromethyl-2-perfluoroethylmethyl methacrylate, 2-perfluorohexylethyl methacrylate, 2-perfluorodecylethyl methacrylate and 2-perfluorohexadecylethyl methacrylate.

Among the acrylate esters and methacrylate esters mentioned above, aliphatic hydrocarbon esters of acrylic acid or aliphatic hydrocarbon esters of methacrylic acid are preferred from the cost and ready availability viewpoint; acrylic acid alkyl esters or methacrylic acid alkyl esters are more preferred, and methyl acrylate or methyl methacrylate is particularly preferred.

The average molecular weight of the acrylic polymer or methacrylic polymer is not particularly restricted but may be appropriately selected considering the physical properties required. The average molecular weight of the acrylic polymer or methacrylic polymer is preferably 3,000 to 500,000, more preferably 4,000 to 400,000, still more preferably 5,000 to 300, 000, expressed in terms of number average molecular weight. In the practice of the invention, the number average molecular weight can be measured by gel permeation chromatography (GPC) .

As mentioned hereinabove, (meth)acrylic copolymers obtained by copolymerizing two or more monomers selected from among acrylate esters and methacrylate esters can also preferably be used in the process of the invention. The structure of such copolymers is not particularly restricted but mention may be made of random copolymers and block copolymers, among others. Among them, linear block copolymers or branched (star) block copolymers or mixtures thereof are preferred. Such structurally different block copolymers are used depending on different requirements, such as the physical properties required of the (meth)acrylic block copolymer and the processing characteristics and mechanical characteristics required of the composition comprising the copolymer and a thermoplastic resin. From the cost and easy polymerization viewpoint, linear block copolymers are particularly preferred. As the copolymers, there may be mentioned, for example, those (meth) acrylic block copolymers comprising a methacrylic polymer block (a) and an acrylic polymer block (b) which are described later herein as constituting the second aspect of the invention.

In the practice of the invention, use may also be made of a composition comprising a mixture of two or more acrylic (co)polymers or methacrylic (co)polymers as the (meth) acrylic polymer. Further, a composition comprising a compound or compounds other than (meth) acrylic polymers together with one or more (meth) acrylic polymers may also be used. For improving the thermal stability, weather resistance and chemical resistance, among others, such a composition that can be finally crosslinkable may also be used. As examples of such composition, there may be mentioned compositions comprising such a (meth)acrylic block copolymer as mentioned above and a functional group-containing compound for crosslinking the (meth)acrylic block copolymer.

The above-mentioned isobutylene-based polymer that can be preferably used in the practice of the invention is not particularly restricted but may be any of those polymers derived mainly from isobutylene. Preferred are block copolymers composed of a polymer block derived mainly from isobutylene and a polymer block derived mainly from an aromatic vinyl monomer. More specifically, polymers obtained by cationic polymerization of isobutylene and an aromatic vinyl monomer or a like monomer using an initiator in the presence of a Lewis acid catalyst can suitably be used.

The polymer block derived mainly from isobutylene is generally a polymer block having an isobutylene unit content of not lower than 60% by weight, preferably not lower than 80% by weight. The polymer block derived mainly from an aromatic vinyl monomer is generally a polymer block having an aromatic vinyl monomer unit content of not lower than 60% by weight, preferably not lower than 80% by weight.

The aromatic vinyl monomer is not particularly restricted but includes, among others, styrene, o-, m- or p-methylstyrene, $\alpha$-methylstyrene and indene. These may be used singly or two or more of them may be used in combination. Among them, styrene, p-methylstyrene, $\alpha$-methylstyrene or a mixture thereof is particularly preferred from the cost viewpoint.

In the practice of the invention, the Lewis acid catalyst is not particularly restricted but may be any of those

which can be used in cationic polymerization, including metal halides such as $TiCl_4$, $BCl_3$, $BF_3$, $AlCl_3$ and $SnCl_4$. Among them, titanium tetrachloride ($TiCl_4$) is preferred.

The polymerization solvent to be used in the above cationic polymerization is not particularly restricted but use may be made of a solvent comprising a halogenated hydrocarbon, a halogen-free solvent or a mixture of these may be used. Preferred are mixed solvents composed of a primary and/or secondary monohalogenated hydrocarbon containing 3 to 8 carbon atoms and an aliphatic and/or aromatic hydrocarbon.

The primary and/or secondary monohalogenated hydrocarbon containing 3 to 8 carbon atoms is not particularly restricted but includes methyl chloride, methylene chloride, 1-chlorobutane, chlorobenzene and the like. Among them, 1-chlorobutane is suited for use in view of the balance among the solubility of isobutylene-based block copolymers, the ease of rendering it nonhazardous by decomposition, the cost thereof, etc.

The aliphatic and/or aromatic hydrocarbon mentioned above is not particularly restricted but includes, among others, pentane, hexane, heptane, octane, cyclohexane, methylcyclohexane, ethylcyclohexane and toluene. One or more species selected from the groups consisting of methylcyclohexane, ethylcyclohexane and toluene are particularly preferred.

As for the initiator to be used on the occasion of cationic polymerization, compounds represented by the following general formula (I) are preferably used.

$$(CR^7R^8X)_nR^9 \qquad (I)$$

[In the formula, X represents a halogen atom or an alkoxy or acyloxy group containing 1 to 6 carbon atoms. $R^7$ and $R^8$ may be the same or different and each represents a hydrogen atom or a monovalent hydrocarbon group containing 1 to 6 carbon atoms, $R^9$ represents a polyvalent aromatic hydrocarbon group or a polyvalent aliphatic hydrocarbon group, and n represents a natural number of 1 to 6.]

As a typical example of the compound represented by the general formula (I), there may be mentioned 1,4-bis($\alpha$-chloroisopropyl)benzene [$C_6H_4(C(CH_3)_2Cl)_2$] [1,4-bis($\alpha$-chloroisopropyl)benzene is also called dicumyl chloride].

In producing such an isobutylene-based block copolymer, an electron donor component may further be allowed to coexist in the system according to need. As such compound, there may be mentioned, for example, pyridines, amines, amides, sulfoxides, esters, or metal atom-bound oxygen atom-containing metal compounds.

In actually carrying out the polymerization, the respective components are blended under cooling, for example at a temperature of not lower than -100˚C but lower than 0˚C. A particularly preferred temperature range for balancing the energy cost with the stability of polymerization is -80˚C to -30˚C.

The molecular weight of the isobutylene-based block copolymer is not particularly restricted, either, but, from the flowability, processability and physical properties viewpoint, among others, it is preferably 30,000 to 500,000, particularly preferably 50,000 to 400,000, as expressed in terms of number average molecular weight.

<Fillers>

One or more of various fillers other than polymers may further be added to the polymers to be used in the practice of the invention. In the case where the spherical polymer powder obtained by the process of the invention is to be used as a material for powder slush molding, inorganic particles or organic particles, such as filler particles, may be added for improving the handling characteristics of the powder to be obtained and/or for providing antiblocking properties. Specifically, there may be mentioned particles of talc, kaolin, silica or the like as inorganic particles, and particles of (meth)acrylic resins, silicone resins, polypropylene, polyethylene and polystyrene as organic particles. At least one kind of particles as selected from the group consisting of those can be added. These fillers may be added either before organic solvent evaporation from the polymer solution or after organic solvent evaporation.

The filler addition amount is properly adjusted according to the physical characteristics required. A preferred addition amount is 1.0 to 50 parts by weight, a more preferred addition amount is 5 to 40 parts by weight, and a particularly preferred addition amount is 10 to 30 parts by weight, per 100 parts by weight of the polymer. At amounts lower than 1.0 part by weight, the effect is often produced only to an unsatisfactory extent and, at amounts exceeding 50 parts by weight, the mechanical characteristics of the resulting powder may be adversely affected in some instances.

In the production process of the invention, granulation can be carried out while maintaining such a condition that inorganic particles or like filler particles and/or other additive particles are uniformly dispersed in a polymer solution having a relatively low viscosity and, therefore, particles with inorganic particles and/or like particles uniformly dispersed therein can be obtained as compared with the conventional particles obtained by the dispersion method comprising melting an additive(s) in resin pellets and then grinding the resulting blend. The invention has a further effect; namely, inorganic particles and the like can be uniformly dispersed in a simpler and easier manner as compared with the conventional processes. While according to the above description, an additive or additives are added on the occasion of obtaining spherical powders, it is also of course possible to perform the addition and blending of an additive or additives

using a mixer or a like conventional apparatus after obtaining spherical powders as in the conventional processes.

The spherical polymer powder obtained in accordance with the invention can be used in the field of toners and, therefore, one or more of such conventional additives as pigments, waxes and antistatic agents, without any particular restriction. The addition amount of such additives is also properly adjusted according to the physical characteristics required. Generally, the addition amount is preferably 1.0 to 50 parts by weight, more preferably 5 to 40 parts by weight, particularly preferably 10 to 30 parts by weight, per 100 parts by weight of the polymer. At amounts lower than 1.0 part by weight, the effect is often produced only to an unsatisfactory extent and, at amounts exceeding 50 parts by weight, the mechanical characteristics of the resulting powder may be adversely affected in certain instances.

<Dispersants>

The dispersant to be used in the process of the invention is not particularly restricted but includes water-soluble cellulosic resins such as methylcellulose, hydroxyethylcellulose, hydroxypropylmethylcellulose and carboxymethylcellulose, polyvinyl alcohols, polyethylene glycol, polyvinylpyrrolidone, polyacrylamide, polystyrenesulfonic acid salts and like organic substances, inorganic solids such as calcium phosphate and calcium carbonate, and nonionic surfactants such as glycerol fatty acid esters, sorbitan esters, propylene glycol fatty acid esters, sucrose fatty acid esters, citric acid mono (or di or tri) stearin esters, pentaerythritol fatty acid esters, trimethylolpropane fatty acid esters, polyglycerol fatty acid esters, polyoxyethyleneglycerol fatty acid esters, polyesters, polyoxyethylenesorbitan fatty acid esters, polyethylene glycol fatty acid esters, polypropylene glycol fatty acid esters, polyoxyethylene glycol fatty alcohol ethers, polyoxyethylene alkylphenyl ethers, N,N-bis(2-hydroxyethylene)fatty amines, ethylenebisstearamide, fatty acid-diethanol condensation products, polyoxyethylene-polyoxypropylene block polymers, polyethylene glycol and polypropylene glycol. Appropriate ones are selected from among these according to the polymer to be used. Among those, at least one species selected from the group consisting of methylcellulose, polyvinyl alcohol, calcium phosphate, calcium carbonate and nonionic surfactants is preferably used from the good dispersibility viewpoint. Such dispersants may be used singly or two or more of them may be used in combination. In the case of combined use of two or more species, the combination is not particularly restricted but mixtures of two or more selected from among methylcellulose, polyvinyl alcohol, calcium phosphate, calcium carbonate and nonionic surfactants are preferably used.

The addition amount of the dispersant is properly selected considering the ability to disperse the polymer and the properties of the solvent. For example, when a (meth) acrylic polymer or an isobutylene-based polymer is used, the dispersant is added preferably in an amount of 0.01 to 5 parts by weight, more preferably 0.05 to 3 parts by weight, particularly preferably 0.1 to 2 parts by weight, per 100 parts by weight of the polymer. At amounts below 0.01 part by weight, sufficient dispersion of the polymer will not be attained and, in some cases, it becomes difficult to obtain the desired particles and, at amounts exceeding 5 parts by weight, the excessive addition will not result in any particular further change in dispersion characteristics, hence is economically unfavorable and, in addition, such physical characteristics as the transparency of the polymer and moldability may possibly be adversely affected.

The single use of a polyvinyl alcohol or methylcellulose as the dispersant is favorable since it makes it easy to obtain the desired spherical polymer powder. It is also possible to use calcium carbonate or calcium phosphate in combination. When a nonionic surfactant is used, it is possible to use the same singly but the combined use of calcium carbonate and/or calcium phosphate is preferred since the granulation becomes easier. In this case, the amount of the nonionic surfactant is not larger than 50 parts by weight, more preferably 3 to 30 parts by weight, particularly preferably 5 to 20 parts by weight, per part by weight of calcium carbonate and/or calcium phosphate.

The order of addition of the dispersant is not particularly restricted. The dispersant may be added to water prior to addition of the polymer solution or to the polymer solution before addition of water.

<Production process of the invention>

The process of the invention is a process for obtaining spherical polymer powders by heating, with stirring, an aqueous dispersion comprising a solution of a polymer dissolved in a solvent, water, a filler and a dispersant. The apparatus to be used for the stirring is not particularly restricted but, for example, the process can be carried out in a reaction vessel equipped with a jacket and a stirrer. The shape of the stirring impeller to be attached to the stirrer is not particularly restricted, either, but a screw impeller, propeller impeller, anchor impeller, paddle impeller, inclined paddle impeller, turbine impeller or large size grid type impeller or a like arbitrary impeller can be used. These can be used for carrying out the liquid-liquid dispersion procedure and solvent removing procedure in one and the same stirring vessel, or in carrying out the liquid-liquid dispersion procedure in advance for dispersion formation and the subsequent solvent removing procedure using a plurality of stirring vessels.

In the process according to the invention, the aqueous dispersion comprising the solution of the polymer dissolved in a solvent, water and the dispersant is heated with stirring under conditions such that the power per unit liquid volume, P/V, may amounts to at least 0.2 $kW/m^3$. When the P/V value is smaller than 0.2 $kW/m^3$, it becomes

difficult to uniformly stir the polymer. The P/V value is preferably not smaller than 0.3 $kW/m^3$, particularly preferably not smaller than 0.4 $kW/m_3$. The upper limit thereto is not particularly restricted but preferably is not higher than 70 $kW/m^3$, more preferably not higher than 50 $kW/m^3$.

The P/V value is determined on the following principle. Accompanying the stirring, load torque is generated, as repulsive force pushing away the liquid, on the stirring impeller shaft. The torque (T) is the product of distance (M) from shaft center and tangential force (F). Once the load torque (in kgf·cm) is determined, the stirring power (in kW) is given as P = NT/95000. Here, N is the shaft rotation speed (in rpm). In the practice of the invention, the P/V value is determined, based on the stirring power (P) indicated by the stirrer and the charge amount (V) in the reaction vessel, by calculating as follows:

P/V ($kW/m^3$) = [(stirring power (kW) indicated by stirrer)/(charge amount ($m^3$) in reaction vessel)].

The stirring time is not particularly restricted but is properly determined according to the dispersibility of the polymer so that the polymer may be sufficiently dispersed. The stirring time is generally 1 minute to 5 hours, preferably 5 minutes to 3 hours, more preferably 10 minutes to 2 hours.

The liquid temperature during heating is not particularly restricted but is preferably not lower than the azeotropic point of the solvent. If, however, the vessel inside is placed under reduced pressure, the solvent can be removed with ease even at temperatures lower than the azeotropic point of the solvent. Specifically, a temperature of not lower than 70˚C but lower than 160˚C is preferred, and a temperature of not lower than 80˚C but lower than 150˚C is more preferred. At below 70˚C, the amount of the solvent remaining in spherical particles increases and this is unfavorable since the safety and solvent recovery in the step of drying, among others, decrease. At 160˚C or higher, spherical particles of the polymer soften, possibly resulting in aggregation thereof, for instance, hence failure thereof to be dispersed in the form of single spherical fine particles.

The solvent to be used in the process of the invention is not particularly restricted but is properly selected so that the polymer used may be dissolved therein. Considering the ease of handling at room temperature, the boiling point of the solvent is preferably not lower than 25˚C, more preferably not lower than 30˚C, at ordinary pressure (1 atmosphere). Since the solvent is finally evaporated off, the boiling point of the solvent is preferably not higher than 130˚C, more preferably not higher than 120˚C, particularly preferably not higher than 100˚C, at ordinary pressure (1 atmosphere).

As specific examples of the solvent, there may be mentioned aliphatic hydrocarbons such as pentane, hexane, heptane, cyclohexane and cyclopentane, aromatic hydrocarbons such as benzene, toluene, ethylbenzene and xylene, ethers such as methyl ethyl ether, diethyl ether and tetrahydrofuran, esters such as ethyl acetate, and halogenated hydrocarbons such as dichloromethane and chloroform.

The amount of the solvent to be used is properly selected considering the polymer solution concentration and viscosity and other factors. Preferably, the solvent is used in an amount such that the solid concentration of the polymer solution may amount to 5 to 70% by weight. When the polymer solution has a solid concentration lower than 5% by weight, the yield becomes inefficiently low and, when the solid concentration is above 70% by weight, the viscosity of the whole solution will become excessively high, possibly resulting in insufficient dispersion of the polymer upon stirring. More preferably, the solvent is used in an amount such that the solid concentration of the polymer solution may amount to 10 to 50% by weight, still more preferably 10 to 30% by weight.

The amount of water to be used can be properly determined considering the desired polymer particle diameter and other factors. The amount of water is preferably 25 to 500% by volume, more preferably 40 to 400% by volume, particularly preferably 50 to 300% by volume, with the volume of the polymer solution being taken as 100% by volume.

In the process of the invention, the aqueous dispersion is preferably heated by blowing steam into the same to remove the solvent from the aqueous dispersion in the manner of steam stripping.

The time required for steam stripping is selected so that it may be sufficient to distill off the solvent almost completely. Since stirring influences the state of dispersion and the degree of formation and morphology of polymer particles, the steam stripping is carried out in a condition such that the solution is thoroughly stirred.

The vessel to be used in stripping is only required that it be provided with a pipe for introducing steam as inserted into the liquid phase and, like in suspension or solvent removal operations, the method comprising introducing steam into a stirrer is adequately used. The steam stripping operation may be carried out, simultaneously with stirring the aqueous dispersion of the polymer solution with heating, by passing steam into the same vessel, or may be carried out successively by providing a separate stripping vessel. Further, it is also possible to carry out the stripping continuously by connecting one or more aeration/stirring vessels or contacting steam with the resin in slurry form in a tray column. From the viewpoint of high solvent removal efficiency, the steam stripping is preferably carried out simultaneously in the same vessel as used for stirring the aqueous dispersion of the polymer solution with heating.

The temperature of the aqueous dispersion on the occasion of steam stripping is preferably equal to or higher than the azeotropic temperature of the solvent and water, like the liquid heating temperature mentioned above. Specifically, the temperature is preferably not lower than 70˚C but lower than 160˚C, more preferably not lower than 80˚C but lower than 150˚C, although it may vary depending on the solvent employed. In cases where the steam stripping is carried out at 100˚C or above, it can be performed by pressurizing the vessel inside through decreasing the flow in the evaporated fraction outlet line.

The solvent evaporated by heating and/or steam stripping is then sent to a cooling tower or the like for cooling and thus can be recovered. If necessary, the solvent may be separated from the aqueous phase and then purified or otherwise treated for recycling to the polymerization step.

After obtaining a spherical polymer powder-containing aqueous dispersion, the spherical polymer powder can be separated by subjecting the aqueous dispersion, for example, to filtration, centrifugation or sedimentation treatment according to need. If necessary, it may further be dried using a conductive drier, such as a trough type agitated drier, or a hot air heat demand drier, such as a fluidized drier, to give the desired spherical polymer powder.

<Spherical polymer powders>

According to the process of the invention, it is possible to efficiently obtain spherical polymer powders with 90% or more of the total number of powder particles having an aspect ratio, expressed as the ratio between the small axis and large axis of particle, of 1 to 2, with the average particle diameter being not smaller than 1 μm but smaller than 1, 000 μm.

As the aspect ratio of the spherical polymer powder approaches 1, it is indicated that each particle is close to a real sphere and the flowability of particles is high. From such a viewpoint, it is preferred that 90% or more of the total number of powder particles have an aspect ratio of 1 to 2, more preferably 1 to 1.8, particularly preferably 1 to 1.5. The process of the invention can suitably be used in producing such powder particles.

In the practice of the invention, the aspect ratio of particles is determined by taking a photograph, with a magnification of 100 to 200, of particles using a microscope (KEYENCE Corporation's microscope) and measuring the longest part of each particle as the large diameter and the longest portion thereof perpendicular to the large axis line as the small axis. The ratio large axis/small axis is evaluated as the aspect ratio. For each of about 300 particles, the aspect ratio is evaluated. The proportion of particles with an aspect ratio of 1 to 2 in the total number of powder particles can be calculated as follows:

[(number of particles with an aspect ratio of 1 to 2)/(total number of particles evaluated)] x 100 (%)

In view of the foregoing, the average particle diameter of the spherical polymer particle is preferably not smaller than 1 μm but smaller than 1, 000 μm. Particle diameters greater than 1,000 μm are unfavorable since abnormalities in molding may readily occur when fine-structured molds are used for the molding. When the particle diameter is smaller than 1 μm, generation of static electricity or the like tends to occur, unfavorably resulting in poor flowability in some instances. The particle diameter can be adjusted according to the intended use by adjusting the dispersant amount and/or_ the ratio between the polymer solution and water, for instance. In the process of the invention, a larger dispersant amount and a lower polymer solution/water (v/v) ratio each makes it possible to obtain particles smaller in particle diameter. When the spherical polymer powder is used in molding using a mold, such as in powder slush molding, for instance, particle diameters not smaller than 20 μm but smaller than 700 μm are preferred and particle diameters not smaller than 50 μm but smaller than 500 μm are more preferred from the powder flowability and complete mold filling viewpoint. When the spherical polymer powder is used in toner preparation, the average particle diameter is preferably not smaller than 1 μm but smaller than 50 μm, more preferably not smaller than 3 μm but smaller than 10 μm.

In the practice of the invention, the average particle diameter is determined as an average value on the weight basis by sieving the dry spherical powder using standard sieves and weighing the fractions belonging to the respective particle diameter ranges. The average particle diameter can be determined using, for example, an electromagnetic sieve shaker (AS 200 BASIC (60 Hz), product of Retsch Co., Ltd.).

The spherical polymer powder preferably has, on the particle surface, pores with an inside diameter of 1 to 50% of the particle diameter. The inside diameter is more preferably 3 to 40%, particularly preferably 5 to 25%, of the particle diameter. In the practice of the invention, the ratio between the particle diameter and the inside diameter can be determined by observation under a microscope.

[Second Aspect of the Invention]

In the second aspect thereof, the present invention relates to a (meth)acrylic block copolymer-based spherical powder.

< (Meth) acrylic block copolymer>

In the practice of the invention, the (meth) acrylic block copolymer is a block copolymer containing a block resulting from polymerization of an acrylate ester- and/or methacrylate ester-based monomer composition. The phrase "acrylate ester- and/or methacrylate ester-based" as used herein means that the proportion of the acrylate ester and methacrylate ester is major among all the monomer components constituting the polymer block. In the present specification, "(meth)acrylic" means acrylic and/or methacrylic.

The acrylate ester (s) and methacrylate ester (s) that can be used as monomers serving as raw materials of the above-mentioned (meth)acrylic block copolymer are not particularly restricted but include, among others, those acrylate esters and methacrylate esters enumerated hereinabove referring to the first aspect of the invention.

Among the above-mentioned acrylate esters or methacrylate esters, aliphatic hydrocarbon esters of acrylic acid or aliphatic hydrocarbon esters of methacrylic acid are preferred, acrylic acid alkyl esters or methacrylic acid alkyl esters are more preferred, and methyl acrylate or methyl methacrylate is particularly preferred from the cost and ready availability viewpoint.

The average molecular weight of the (meth) acrylic block copolymer is not particularly restricted but may be selected properly according to the physical characteristics required. The average molecular weight of the (meth)acrylic block copolymer is preferably 3, 000 to 500, 000, more preferably 4, 000 to 400, 000, still more preferably 5, 000 to 300,000, as expressed in terms of number average molecular weight. In the practice of the invention, the number average molecular weight can be determined by gel permeation chromatography (GPC).

The ratio (Mw/Mn) between the weight average molecular weight (Mw) and number average molecular weight (Mn) of the (meth) acrylic block copolymer as determined by gel permeation chromatography is preferably not higher than 1.8, more preferably not higher than 1.5. When Mw/Mn exceeds 1.8, the spherical polymer powder may be deteriorated in homogeneity in certain instances.

Although the structure of the (meth)acrylic block copolymer is not particularly restricted, linear block copolymers or branched (star) block copolymers, or mixtures thereof are preferred. Such block copolymer structures are used depending on different physical properties required of the (meth) acrylic block copolymer. From the cost and easy polymerization viewpoint, linear block copolymers are particularly preferred, however.

The spherical powder of the invention may be a mixture composed of two or more (meth)acrylic block copolymers. Furthermore, not only the (meth) acrylic block copolymer(s) alone but also a (meth) acrylic block copolymer-based composition containing another compound (s) or the like may also be used. For example, a finally crosslinkable (meth)acrylic block copolymer-containing composition can also be used for improving the thermal stability, weather resistance and chemical resistance, among others. Preferably used as such composition is, for example, a composition comprising a (meth) acrylic block copolymer (A) comprising such a methacrylic polymer block (a) and acrylic polymer block (b) as shown below and containing a reactive functional group [hereinafter the reactive functional group which the (meth)acrylic block copolymer has is referred to as "reactive functional group (X)"] in the block (a) or (b) and a compound (B) containing, on an average, 1.1 or more functional groups [hereinafter this reactive functional group species is referred to as "reactive functional group (Y)"] capable of reacting the reactive functional group (X) per molecule.

The above-mentioned (meth)acrylic block copolymer (A) structurally comprises the hard segment methacrylic polymer block (a) and the soft segment acrylic polymer block (b) . The methacrylic polymer block (a) contributes toward the retention of shape on the occasion of molding while the acrylic polymer block (b) makes it possible to obtain highly elastic moldings and further increases the flowability in the molten state on the occasion of molding.

The (meth)acrylic block copolymer (A) preferably comprises 15 to 50% by weight of the methacrylic polymer block (a) and 85 to 50% by weight of the acrylic polymer block (b). When the proportion of the methacrylic polymer block (a) is smaller than 15% by weight and the proportion of the acrylic polymer block (b) is greater than 85% by weight, the retention of shape in molding may be inferior in certain cases and, when the proportion of the methacrylic polymer block (a) is greater than 50% by weight and the proportion of the acrylic polymer block (b) is smaller than 50% by weight, the moldings may become decreased in some instances and, further, the flowability in the molten state may possibly decreases.

From the hardness of moldings viewpoint, a smaller proportion of the methacrylic polymer block (a) tends to lead to low hardness and a smaller proportion of the acrylic polymer block (b) tends to result in high hardness. Therefore, it is necessary to properly select the ratio between the methacrylic polymer block (a) and acrylic polymer (b) in the composition taking the hardness required of the moldings into consideration. From the moldability/processability viewpoint, a smaller proportion of the methacrylic polymer block (a) rends to result in low viscosity in the molten state whereas

a smaller proportion of the acrylic polymer block (b) tends to lead to high viscosity in the step of melting. Therefore, it is necessary to properly select the ratio between the methacrylic polymer block (a) and acrylic polymer block (b) in the composition considering the required viscosity as well.

The linear block copolymer may have any arbitrary structure. From the viewpoint of physical characteristics of the linear block copolymer and physical characteristics of the powder, however, it preferably comprises at least one acrylic block copolymer selected from the group consisting of $(a\text{-}b)_n$ type, $b\text{-}(a\text{-}b)_n$ type and $(a\text{-}b)_n\text{-}a$ type copolymers, wherein n is an integer not smaller than 1, for example an integer of 1 to 3, a denotes a methacrylic polymer block (a) and b denotes an acrylic polymer block (b). Among these, a-b type diblock copolymers, a-b-a type triblock copolymers, or mixtures of these are preferred in view of the ease of handling in processing and the physical properties of the spherical powders.

As for the glass transition temperature relation between the methacrylic polymer block (a) and acrylic polymer block (b) constituting the (meth)acrylic block copolymer (A), it is preferred, from the viewpoint of mechanical strength and rubber elasticity expression, among others, that the glass transition temperature ($T_{ga}$) of the methacrylic polymer block (a) and the glass transition temperature ($T_{gb}$) of the acrylic polymer block (b) satisfy the relation given below.

$$T_{ga} > T_{gb}$$

The glass transition temperature (Tg) of the (meth) acrylic block copolymer (A) (methacrylic polymer block (a) and acrylic polymer block (b)) can be set out by setting out the weight proportions of the monomers in the respective polymer portions according to the Fox formula given below.

$$1/Tg = (W_1/T_{g1}) + (W_2/T_{g2}) + \cdots + (W_m/T_{gm})$$

$$W_1 + W_2 + \cdots + W_m = 1$$

In the above formulae, $T_g$ represents the glass transition temperature of the polymer segment and $T_{g1}$, $T_{g2}$, ···, $T_{gm}$ denote the glass transition temperatures of the respective polymerized monomers. $W_1$, $W_2$, ···, $W_m$ denote the weight fractions of the respective polymerized monomers.

As for the glass transition temperatures of the respective polymerized monomers in the Fox formula, the values described, for example, in Polymer Handbook, Third Edition (Wiley-Interscience, 1989) can be used.

The glass transition temperature mentioned above can be measured by DSC (differential scanning calorimetry) or from the dynamic viscoelasticity tanδ peak. However, when the methacrylic polymer block (a) and acrylic polymer block (b) are close in polarity to each other or when the number of chain member monomers in any of the blocks is too small, the measured values may divert from the values calculated according to the Fox formula in some instances.

<Methacrylic polymer block (a) >

The methacrylic polymer block (a) is a block resulting from polymerization of a methacrylate ester-based monomer composition and is preferably composed of 50 to 100% by weight of a methacrylate ester and 0 to 50% by weight of a vinyl monomer copolymerizable therewith. When the methacrylate ester proportion is less than 50% by weight, the weather resistance characteristic of the methacrylate ester may be deteriorated in certain instances.

As the methacrylate ester constituting the methacrylic polymer block (a), there may be mentioned, for example, those methacrylate esters mentioned hereinabove. Among them, methyl methacrylate is preferred in view of the processability, cost and ready availability thereof.

As the vinyl monomer copolymerizable with the methacrylate ester constituting the methacrylic polymer block (a), there may be mentioned, for example, acrylate esters, aromatic alkenyl compounds, cyanovinyl compounds, conjugated diene compounds, halogen-containing unsaturated compounds, vinyl ester compounds and maleimide compounds.

As the acrylate esters, there may be mentioned, for example, those enumerated hereinabove as examples of the vinyl monomer copolymerizable with the methacrylate ester constituting the methacrylic polymer block (a).

As the aromatic alkenyl compounds, there may be mentioned, for example, styrene, α-methylstyrene, p-methylstyrene and p-methoxystyrene.

As the cyanovinyl compounds, there may be mentioned, for example, acrylonitrile and methacrylonitrile.

As the conjugated diene compounds, there may be mentioned, for example, butadiene and isoprene.

As the halogen-containing unsaturated compounds, there may be mentioned, for example, vinyl chloride, vinylidene chloride, perfluoroethylene, perfluoropropylene and vinylidene fluoride.

As the vinyl ester compounds, there may be mentioned, for example, vinyl acetate, vinyl propionate, vinyl pivalate, vinyl benzoate and vinyl cinnamate.

As the maleimide compounds, there may be mentioned, for example, maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide.

Those compounds enumerated as the vinyl monomers may be used singly or two or more of them may be used in combination. An appropriate one (s) may be properly selected among these vinyl compounds according to the glass transition temperature of the methacrylic polymer block (a) to be described below and/or the compatibility with the acrylic polymer block (b).

The glass transition temperature of the methacrylic polymer block (a) is preferably adjusted to 50 to 130˚C. In the step of molding, it is necessary for the powder or the fluid resulting from melting of the powder to show a sufficient degree of fluidity so that the polymer may fill every corner of the mold. However, when the cohesive force and/or the glass transition temperature $T_{ga}$ of the methacrylic polymer block (a) is excessively high, the melt viscosity increases and the fluidity tends to become inferior. On the other hand, when the glass transition temperature $T_{ga}$ is excessively low, the resin composition may show fluidity even at ordinary temperature, namely at about 25˚C, and the powder morphology may change in some instances.

<Acrylic polymer block (b)>

From the viewpoint that a spherical powder having desired physical characteristics can be readily obtained and from the cost and ready availability viewpoint, the monomer composition constituting the acrylic polymer block (b) preferably comprises 100 to 50% by weight of an acrylate ester and 0 to 50% by weight of a vinyl monomer copolymerizable therewith, more preferably 100 to 75% by weight of an acrylate ester and 0 to 25% by weight of a vinyl monomer copolymerizable therewith. When the proportion of the acrylate ester is lower than 50% by weight, the physical characteristics, in particular impact resistance, of the spherical powder, which are characteristic of the use of the acrylate ester may be deteriorated in some instances.

The molecular weight required of the acrylic polymer block (b) may be selected according to the elastic modulus and rubber elasticity required of the acrylic polymer block (b) and the time required for the polymerization thereof, among others.

The elastic modulus is closely connected with the mobility and molecular weight of the molecular chain, and the intrinsic elastic modulus will be exhibited only when the molecular weight is at a certain level or above. The same applies to the rubber elasticity; from the rubber elasticity viewpoint, however, a higher molecular weight is desirable. Thus, the number average molecular weight $M_b$ required of the acrylic polymer block (b) is, for example, within the following range: preferably $M_b$ > 3,000, more preferably $M_b$ > 5,000, still more preferably $M_b$ > 10,000, particularly preferably $M_b$ > 20, 000, most preferably $M_b$ > 40,000. However, for obtaining a higher number average molecular weight, the polymerization time required tends to be prolonged and, therefore, the upper limit should be selected according to the productivity requirement. Preferably, the number average molecular weight is not higher than 500,000, more preferably not higher than 300,000.

As the acrylate ester constituting the acrylic polymer block (b), there may be mentioned the above-mentioned examples of the monomer serving as the raw material of the (meth) acrylic block copolymer. These may be used singly or two or more of them may be used in combination.

Among them, acrylic acid aliphatic hydrocarbon esters are preferred, alkyl acrylates are more preferred, and n-butyl acrylate, ethyl acrylate and 2-ethylhexyl acrylate are still more preferred. In view of the impact resistance of the spherical powder and of the cost and ready availability, n-butyl acrylate is particularly preferred. In cases where the spherical powder is required to have oil resistance, ethyl acrylate is preferred. When low temperature characteristics are required, 2-ethylhexyl acrylate is preferred. When both oil resistance and low temperature characteristics are required simultaneously, a mixture of ethyl acrylate, n-butyl acrylate and 2-methoxyethyl acrylate is preferred.

As acrylate esters which are other than ethyl acrylate, n-butyl acrylate and 2-methoxyethyl acrylate and are used to constitute the acrylic polymer block (b), there may be mentioned, for example, the same acrylate ester monomers as enumerated as examples of the monomers constituting the methacrylic polymer block (a). These may be used singly or two or more of them may be used in combination.

As the vinyl monomer copolymerizable with the acrylate ester constituting the acrylic polymer block (b), there may be mentioned, for example, methacrylate esters, aromatic alkenyl compounds, cyanovinyl compounds, conjugated diene compounds, halogen-containing unsaturated compounds, silicon-containing unsaturated compounds, unsaturated carboxylic acid compounds, unsaturated dicarboxylic acid compounds, vinyl ester compounds and maleimide compounds. As specific examples of these, there may be mentioned the same ones as mentioned above for use in the

methacrylic polymer block (a). These vinyl monomers may be used singly or two or more of them may be used in combination. A preferred one(s) may be properly selected from among these vinyl monomers taking into consideration the glass transition temperature and oil resistance required of the acrylic polymer block (b) and the compatibility thereof with the methacrylic polymer block (a), among others. For improving the oil resistance of the spherical powder, for instance, acrylonitrile is preferably copolymerized.

Considering the elasticity of the moldings, the glass transition temperature of the acrylic polymer block (b) is preferably not higher than 25˚C, more preferably not higher than 0˚C, still more preferably not higher than -20˚C. When the glass transition temperature of the acrylic polymer block (b) is higher than the temperature of the environment in which the moldings are used, the flexibility or rubber elasticity will be hardly expressed.

<Reactive functional group (X)>

As mentioned hereinabove, the (meth) acrylic block copolymer (A) preferably used in the practice of the invention preferably contains a reactive functional group (X) in the block (a) or block (b). The reactive functional group (X) is not particularly restricted but may be any one provided that it serves as a site (s) of reaction with the compound (B) described later herein, preferably as a site(s) of reaction or crosslinking for increasing the molecular weight of or crosslinking the (meth) acrylic block copolymer (A). From the viewpoint of the stability of bonds formed upon reaction, the balance between low temperature reactivity and high temperature reactivity, the ease of introduction into the (meth)acrylic block copolymer (A) and the cost, among others, at least one species selected from among acid anhydride, carboxyl and epoxy groups is preferred. Among them, an acid anhydride group and/or a carboxyl group is more preferred in view of the ease of introduction into the (meth)acrylic block copolymer (A), the cost and the balance between low temperature reactivity and high temperature reactivity.

It is also possible to introduce the reactive functional group (X) in the form thereof protected by an appropriate protective group or in the form of a precursor of the reactive functional group (X) into the block copolymer and then regenerate the reactive functional group (X) by an appropriate chemical reaction known in the art.

Two or more such reactive functional groups (X) may be used in combination. In the case of combined use of two or more species, they are preferably selected so that they may not react mutually.

The reactive functional group (X) may be contained either of the methacrylic polymer block (a) or acrylic polymer block (b) or in both blocks. It is possible to properly select the conditions for introducing the reactive functional group (X) according to the intended purposes, for example the site (s) of reaction in the (meth) acrylic block copolymer (A), the cohesive forces and glass transition temperatures of the blocks (methacrylic polymer block (a) and acrylic polymer block (b)) constituting the (meth) acrylic block copolymer (A) and, further, the physical characteristics required of the (meth)acrylic block copolymer (A).

For example, when the compound (B) containing a reactive functional group (Y) reactive with the reactive functional group (X) is to be selectively reacted with the methacrylic polymer block (a) and/or acrylic polymer block (b), the reactive functional group (X) can be introduced into the block or blocks which are the target of selective reaction.

The reactive functional group (X) may be introduced into the methacrylic polymer block (a) for improving the thermal stability and thermal degradation resistance of the (meth) acrylic block copolymer (A). From the viewpoint of providing the (meth)acrylic block copolymer (A) with oil resistance and/or further rubber elasticity and permanent compression set characteristics, the reactive functional group (X) may be introduced into the acrylic polymer block (b) as a site(s) of crosslinking.

Although it is necessary to properly determine the number of reactive functional groups (X) taking into consideration the cohesive force and reactivity of the reactive functional group (X), the structure and composition of the (meth) acrylic block copolymer (A), the number and glass transition temperatures of blocks constituting the (meth)acrylic block copolymer (A), among others, according to need, the number is, on an average, preferably not smaller than 1.0, more preferably not smaller than 2.0, per molecule of the block copolymer. This is because when the number is smaller than 1.0 on an average, the increase in molecular weight of the block copolymer or the improvement in thermal stability as resulting from crosslinking tends to become insufficient.

When the reactive functional group (X) is introduced into the methacrylic polymer block (a), the group (X) is preferably introduced at a level in the range in which the moldability of the acrylic block copolymer (A) will not be decreased. In the case of powder slush molding, the copolymer powder is required to flow even without pressurization. However, when the cohesive force and glass transition temperature $Tg_a$ of the methacrylic polymer block (a) are increased by introduction of the reactive functional group (X), the melt viscosity tends to increase and the moldability tends to become deteriorated. Therefore, specifically, the introduction is preferably carried out so that the glass transition temperature $Tg_a$ of the methacrylic polymer block (a) after introduction of the reactive functional group (X) may fall within the range of not higher than 130˚C, more preferably not higher than 110˚C, still more preferably not higher than 100˚C.

When the reactive functional group (X) is introduced into the acrylic polymer block (b), the introduction is preferably carried out within the limits within which the flexibility, rubber elasticity and low-temperature characteristics

of the (meth)acrylic block copolymer (A) will not be deteriorated. When the cohesive force and glass transition temperature $Tg_b$ of the acrylic polymer block (b) are increased by introduction of the reactive functional group (X), the flexibility, rubber elasticity and low-temperature characteristics tend to become deteriorated. Therefore, specifically, the introduction is preferably carried out so that the glass transition temperature $Tg_b$ of the acrylic polymer block (b) after introduction of the reactive functional group (X) may remain at a level not higher than 25˚C, more preferably not higher than 0˚C, still more preferably not higher than -20˚C.

In the following, the acid anhydride, carboxyl and epoxy groups, which are preferred as the reactive function group (X), are described.

<Acid anhydride group>

The acid anhydride group readily reacts with such reactive functional groups as hydroxyl and amino groups. When the composition contains an active proton-containing compound, the acid anhydride group can also react with an epoxy group.

The acid anhydride group may be introduced into the (meth) acrylic block copolymer (A) in the main chain thereof or on a side chain (s) thereof. In view of the ease of introduction into the (meth)acrylic block copolymer (A), it is preferably introduced into the main chain. The acid anhydride group is derived from two carboxyl groups by dehydration and, specifically, it is preferably contained in the copolymer in the form represented by the general formula (1):

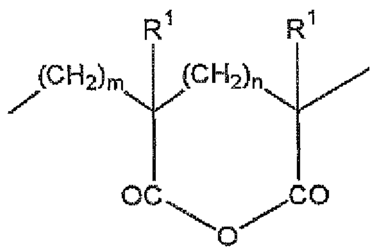

(1)

(In the formula, $R^1$ is a hydrogen atom or a methyl group and the two $R^1$ groups may be the same or different; n is an integer of 0 to 3 and m is an integer of 0 or 1.)

In the general formula (1), n is an integer of 0 to 3, preferably 0 or 1, more preferably 1. When n is 4 or higher, there is a tendency for the polymerization to become complicated or for the cyclization for acid anhydride group formation to become difficult.

The acid anhydride group introduction is preferably carried out by direct polymerization when the acid anhydride group-containing monomer will not suffocate the catalyst under polymerization conditions. When the reactive functional group-containing monomer inactivates the catalyst on the occasion of polymerization, the method of acid anhydride group introduction which involves functional group conversion is preferred. The method to be employed is not particularly restricted but the method comprising introducing a precursor of the acid anhydride group into the (meth)acrylic block copolymer and subsequently cyclizing the precursor group is preferred in view of the ease of introduction. A more preferred method comprises subjecting a (meth)acrylic block copolymer containing at least one unit represented by the general formula (2) :

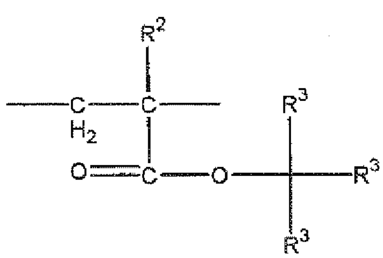

(2)

wherein $R^2$ represents a hydrogen atom or a methyl group, $R^3$ represents a hydrogen atom or a methyl or phenyl group and at least two of the three $R^3$ groups are selected from the group consisting of methyl and phenyl groups and these may be the same or different, to melt kneading for cyclization to thereby accomplish the desired acid anhydride group introduction.

The introduction of the unit represented by the general formula (2) into the (meth)acrylic block copolymer can

be realized by compolymerization of an acrylate ester or methacrylate ester monomer from which the general formula (2) is derived. The monomer includes, but it not limited to, tert-butyl (meth)acrylate, isopropyl (meth)acrylate, $\alpha,\alpha$-dimethylbenzyl (meth)acrylate and $\alpha$-methylbenzyl (meth)acrylate. Among them, tert-butyl (meth)acrylate is preferred in view of availability, ease of polymerization and ease of acid anhydride group formation, among others.

The step of acid anhydride group formation from the precursor by cyclization is preferably carried out by heating the acid anhydride group precursor-containing (meth)acrylic block copolymer at an elevated temperature, preferably at 180 to 300˚C. At temperatures lower than 180˚C, the acid anhydride group formation tends to be insufficient and, at temperatures higher than 300˚C, the acid anhydride precursor-containing (meth) acrylic block copolymer itself tends to be decomposed.

<Carboxyl group>

The carboxyl group readily reacts with such a reactive functional group as an epoxy or amino group. The carboxyl group may be found introduced in the main chain of the (meth) acrylic block copolymer (A) or on a side chain (s) thereof. Preferably, the carboxyl group is introduced into the main chain of the (meth)acrylic block copolymer (A) because of the ease of introduction thereinto.

As for the method of carboxyl group introduction, introduction by direct polymerization is preferred when the catalyst will not be suffocated by the carboxyl group-containing monomer under polymerization conditions and, when the carboxyl group-containing monomer inactivates the catalyst on the occasion of polymerization, the method of carboxyl group introduction which is based on functional group conversion is preferred.

According to the method of carboxyl group introduction through functional group conversion, the carboxyl group in the form protected by an appropriate protective group or in the form of a functional group serving as a precursor of the carboxyl group is introduced into the (meth) acrylic block copolymer (A) and, thereafter, the carboxyl group can be generated by an appropriate chemical reaction known in the art.

Available as the method of synthesizing a carboxyl group-containing (meth)acrylic block copolymer (A) are the method comprising synthesizing a (meth) acrylic block copolymer comprising a carboxyl group precursor functional group-containing monomer such as tert-butyl methacrylate, tert-butyl acrylate, trimethylsilyl methacrylate or trimethylsilyl acrylate and subjecting the copolymer to such a known chemical reaction as hydrolysis or acid decomposition (Japanese Kokai Publication Hei10-298248; Japanese Kokai Publication 2001-234146) and the method comprising subjecting a (meth) acrylic block copolymer containing at least one unit represented by the general formula (2):

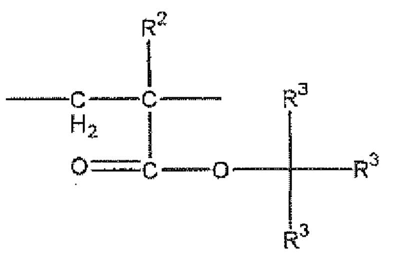

(2)

wherein $R^2$ represents a hydrogen atom or a methyl group, $R^3$ represents a hydrogen atom or a methyl or phenyl group and at least two of the three $R^3$ groups are selected from the group consisting of methyl and phenyl groups and these may be the same or different, to melt kneading for carboxyl group introduction. The unit represented by the general formula (2) undergoes ester unit decomposition at elevated temperatures to form a carboxyl group, partly followed by the pathway leading to cyclization to form an acid anhydride group. By utilizing this and by properly adjusting the heating temperature and time according to the unit species represented by the general formula (2) and the content thereof, carboxyl group introduction can be realized. It is also possible to accomplish carboxyl group introduction by hydrolyzing an acid anhydride group. The hydrolysis for carboxyl group introduction can be carried out by heating a (carboxyl group) precursor-containing acrylic block copolymer in the presence of an acid catalyst for hydrolysis. As for the reaction temperature on that occasion, heating is preferably carried out at 100 to 300˚C. At below 100˚C, the carboxyl group formation tends to be insufficient and, at above 300˚C, the carboxyl group precursor-containing acrylic block copolymer itself may be decomposed.

<Epoxy group>

The epoxy group readily reacts with such a reactive functional group as a carboxyl, hydroxyl or amino group. The epoxy group is not particularly restricted but may be any epoxy ring-containing organic group. Thus, there may be

mentioned, for example, epoxy ring-containing aliphatic hydrocarbon (e.g. alkyl) groups such as 1,2-epoxyethyl, 2,3-epoxypropyl (namely glycidyl) and 2,3-epoxy-2-methylpropyl; and epoxy ring-containing alicyclic hydrocarbon groups such as 3,4-epoxycyclohexyl. An appropriate one may be selected from among them according to need and according to the reactivity, rate of reaction, ready availability, cost and other factors. A preferred one among them is, but is not limited to, glycidyl because of its ready availability.

The epoxy group introduction is preferably carried out by direct polymerization of an epoxy group-containing monomer. The epoxy group-containing monomer is, for example, glycidyl (meth)acrylate, 2,3-epoxy-2-methylpropyl (meth)acrylate, (3,4-epoxycyclohexyl)methyl (meth)acrylate or a like ester derived from (meth)acrylic acid and an alcohol containing an epoxy ring-containing organic group; or 4-vinyl-1-cyclohexene 1,2-epoxide or a like epoxy group-containing unsaturated compound. An appropriate one may be selected from among them according to need and according to the reactivity, rate of reaction, ready availability, cost and other factors and, among those mentioned above, glycidyl (meth) acrylate is preferred in view of ready availability.

<Method for producing (meth)acrylic block copolymer (A)>

The method for producing the above-mentioned (meth)acrylic block copolymer (A) is not particularly restricted but preferably consists in controlled polymerization using an initiator. As the controlled polymerization, there may be mentioned living anion polymerization, radical polymerization using a chain transfer agent, and living radical polymerization which is a technique recently developed. Among them, the acrylic block copolymer is preferably produced by living radical polymerization from the viewpoint of the molecular weight and structure thereof.

The living radical polymerization is a kind of radical polymerization in which the activity of the polymerization terminus is not lost but is retained. In the narrow sense of the term, living polymerization refers to a mode of polymerization in which the terminus always retains its activity. Generally, however, it includes pseudo-living polymerization in which the inactivated and activated termini are in an equilibrium state. The latter definition is employed herein. In recent years, the technique of living radical polymerization has been actively studied by various groups.

As examples thereof, there may be mentioned, among others, the use of such a chain transfer agent as a polysulfide, the use of a cobalt-porphyrin complex (Journal of the American Chemical Society, 1994, vol. 116, page 7943), the use of such a radical scavenger as a nitroxide compound (Macromolecules, 1994, vol. 27, page 7228), and atom transfer radical polymerization (ATRP) using an organic halide or the like as an initiator and a transition metal complex as a catalyst. As to which method among these is to be used in the practice of the present invention, there is no particular restriction but atom transfer radical polymerization is preferred in view of easy controllability, among others.

The atom transfer radical polymerization is carried out using an organic halide or sulfonyl halide compound as an initiator and a metal complex the center metal of which is an element of the group 7, 8, 9, 10 or 11 of the periodic table of the elements (cf. e.g. Matyjaszewski et al., Journal of the American Chemical Society, 1995, vol. 117, page 5614; Macromolecules, 1995, vol. 28, page 7901; Science, 1996, vol. 272, page 866; or Sawamoto et al., Macromolecules, 1995, vol. 28, page 1721).

According to these techniques, in spite of its being a type of radical polymerization generally very high in rate of polymerization and readily allowing radical-to-radical coupling or a like termination reaction, the polymerization can proceed in a living manner to give polymers narrow in molecular weight distribution (Mw/Mn = 1.1 to 1.5) and the molecular weight can be freely controlled by selecting the monomer/initiator ratio.

The organic halide or sulfonyl halide compound to be used as an initiator in atom transfer radical polymerization may be a monofunctional, difunctional or polyfunctional compound. These may be used in different ways according to the intended purpose and, in producing diblock copolymers, monofunctional compounds are preferred from the viewpoint of ready availability of initiators and, in producing a-b-a type triblock copolymers and b-a-b type triblock copolymers, difunctional compounds are preferably used for reducing the number of reaction steps and the time. In producing branched block copolymers, polyfunctional compounds are preferably used for reducing the number of reaction steps and the time.

It is also possible to use macromolecular initiators as initiators. Macromolecular initiators are compounds composed of a polymer and a halogen atom bound to at least one molecular chain terminus among organic halides or sulfonyl halide compounds. Such macromolecular initiators can be produced also by a controlled polymerization method other than the living radical polymerization technique and therefore are characterized in that they can give block copolymers resulting from binding of polymers obtained by different polymerization methods.

As the monofunctional compounds, there may be mentioned, for example, compounds represented by the following formulae:

$C_6H_5\text{-}CH_2X$,

$C_6H_5\text{-}C(H)(X)\text{-}CH_3$,

$C_6H_5-C(X)\ (CH_3)_2$,

$R^4-C(H)(X)-COOR^5$,

$R^4-C(CH_3)(X)-COOR^5$,

$R^4-C(H)(X)-CO-R^5$,

$R^4-C(CH_3)(X)-CO-R^5$ and

$R^4-C_6H_4-SO_2X$.

In the above formulae, $C_6H_5$ represents a phenyl group and $C_6H_4$ represents a phenylene group (which may be an ortho-, meta- or para-phenylene). $R^4$ represents a hydrogen atom, an alkyl group containing 1 to 20 carbon atoms, an aryl group containing 6 to 20 carbon atoms or an aralkyl group containing 7 to 20 carbon atoms. X represents a chlorine, bromine or iodine atom. $R^5$ represents a monovalent organic group containing 1 to 20 carbon atoms.

Ethyl 2-bromopropionate and butyl 2-bromopropionate, as specific examples of the monofunctional compounds, are preferred since they are similar in structure to acrylate ester monomers and therefore can control the polymerization with ease.

As the difunctional compounds, there may be mentioned, for example, compounds represented by the following formulae:

$X-CH_2-C_6H_4-CH_2-X$,

$X-CH\ (CH_3)-C_6H_4-CH(CH_3)-X$,

$X-C\ (CH_3)_2-C_6H_4-C(CH_3)_2-X$,

$X-CH(COOR^6)-(CH_2)_n-CH(COC)R^6)-X$,

$X-C(CH_3)(COOR^6)-(CH_2)_n-C(CH_3)(COOR^6)-X$,

$X-CH(COR^6)-(CH_2)_n-CH(COR^6)-X$,

$X-C(CH_3)(COR^6)-(CH_2)-C(CH_3)(COR^6)-X$,

$X-CH_2-CO-CH_2-X$,

$X-CH(CH_3)-CO-CH(CH_3)-X$,

$X-C(CH_3)_2-CO-C(CH_3)_2-X$,

$X-CH(C_6H_5)-CO-CH(C_6H_5)-X$,

$X-CH_2-COO-(CH_2)_n-OCO-CH_2-X$,

$X-CH\ (CH_3)-COO-(CH_2)_n-OCO-CH(CH_3)-X$,

$X-C\ (CH_3)_2-COO-(CH_2)\ _n-OCO-C(CH_3)\ _2-X$,

$X-CH_2-CO-CO-CH_2-X$,

$X-CH\ (CH_3)-CO-CO-CH(CH_3)-X$,

$X-C\ (CH_3)\ _2-CO-CO-C(CH_3)\ _2-X$,

$X-CH_2-COO-C_6H_4-OCO-CH_2-X$,

$X-CH(CH_3)-COO-C_6H_4-OCO-CH(CH_3)-X$,

$X-C (CH_3)_2-COO-C_6H_4OCO-C(CH_3)_2-X$ and

$X-SO_2-C_6H_4SO_2X$.

In the above formulae, $R^6$ represents an alkyl group containing 1 to 20 carbon atoms, an aryl group containing 6 to 20 carbon atoms or an aralkyl group containing 7 to 20 carbon atoms, and n represents an integer of 0 to 20. $C_6H_5$, $C_6H_4$ and X are as defined above.

Bis(bromomethyl) benzene, diethyl 2,5-dibromoadipate and diethyl 2,6-dibromopimelate as specific examples of the difunctional compounds are preferred in view of the availability of raw materials.

As the polyfunctional compound, there may be mentioned, for example, compounds represented by the following formulae:

$C_6H_3-(CH_2-X)_3$,

$C_6H_3-(CH(CH_3)-X)_3$,

$C_6H_3-(C(CH_3)_2-X)_3$,

$C_6H_3-(OCO-CH_2-X)_3$,

$C_6H_3-(OCO-CH(CH_3)-X)_3$,

$C_6H_3-(OCO-C(CH_3)_2-X)_3$ and

$C_6H_3-(SO_2-X)_3$.

In the above formulae, $C_6H_3$ is a trisubstituted benzene ring (in which the three bonds each may be at any of positions 1 to 6 and the combination thereof can be properly selected), and X is as defined above.

As specific examples of the polyfunctional compounds, there may be mentioned, for example, tris (bromomethyl) benzene, tris(1-bromoethyl)benzene and tris(1-bromoisopropyl)benzene. Among them, tris (bromomethyl) benzene is preferred in view of the availability of raw materials.

When an organic halide or sulfonyl halide compound containing a functional group(s) other than the group for initiating the polymerization is used, polymers with the functional group(s) other than the group for initiating the polymerization as introduced at the terminus (or termini) or within the molecule can be obtained with ease. As such functional groups other than the group for initiating the polymerization, there may be mentioned alkenyl, hydroxyl, epoxy, amino, amido and silyl groups, among others.

The transition metal complex to be used as a catalyst for atom transfer radical polymerization is not particularly restricted but includes, as preferred species, complexes of mono- or zero-valent copper, divalent ruthenium, divalent iron and divalent nickel, among others.

Among them, copper complexes are preferred from the cost and reaction control viewpoint. As monovalent copper compounds, there may be mentioned, for example, cuprous chloride, cuprous bromide, cuprous iodide, cuprous cyanide, cuprous oxide and cuprous perchlorate. Among them, cuprous chloride and cuprous bromide are preferred from the polymerization control viewpoint. When such monovalent copper compounds are used, 2,2'-bipyridyl type compounds such as 2,2'-bipyridyl and derivatives thereof (e.g. 4,4'-dinoryl-2,2'-bipyridyl, 4,4'-di(5-noryl)-2,2'-bipyridyl); 1,10-phenanthroline type compounds such as 1, 10-phenanthroline and derivatives thereof (e.g. 4,7-dinoryl-1,10-phenanthroline, 5,6-dinoryl-1,10-phenanthroline); polyamines such as tetramethylethylenediamine (TMEDA), pentamethyldiethylenetriamine and hexamethyl(2-aminoethyl)amine and the like may be added as ligands for increasing the catalytic activity.

The catalyst, ligand and activator species to be used may be properly selected in connection with the amounts of the initiator, monomers and solvent employed and the required rate of reaction.

Similarly, the amounts of the catalyst and ligand employed may properly be determined in relation to the amounts of the initiator, monomers and solvent employed and the required rate of reaction. When, for example, a polymer high in molecular weight is to be obtained, the initiator/monomer ratio must be lower as compared with the case of obtaining a polymer lower in molecular weight. In such a case, the rate of reaction can be increased by using the catalyst and ligand in larger amounts. When a polymer showing a glass transition temperature higher than room temperature

and an appropriate organic solvent is added for decreasing the viscosity of the system and increasing the stirring efficiency, the rate of reaction tends to lower. In such a case, the rate of reaction can be increased by using the catalyst and ligand in increased amounts.

The atom transfer radical polymerization can be carried out without using any solvent (bulk polymerization) or in various solvents. In the bulk polymerization or polymerization in various solvents, the polymerization can also be terminated somewhere on the way.

Usable as the solvent are, for example, hydrocarbon type solvents, ether type solvents, halogenated hydrocarbon type solvents, ketone type solvents, alcohol type solvents, nitrile type solvents, ester type solvents and carbonate type solvents.

The polymerization can be carried out within the temperature range of 20˚C to 2C10˚C and is preferably carried out within the range of 50 to 150˚C.

In polymerizing the (meth)acrylic block copolymer (A) mentioned above, use may be made of the method comprising adding monomers one after the other, the method comprising using a polymer synthesized in advance as a macromolecular initiator for the next block polymerization, or the method comprising binding polymers separately polymerized to each other by an appropriate reaction, for instance. Any of these methods may be used and an appropriate one is selected according to the intended purpose. From the simplicity of production process viewpoint, the method comprising adding monomers one after another is preferred.

The reaction mixture obtained by polymerization contains a mixture of the polymer and metal complex and, after removal of the metal complex, among others, a polymer solution containing the (meth) acrylic block copolymer (A) can be obtained.

The thus-obtained polymer solution is then subjected to an evaporation procedure to separate the polymerization solvent and unreacted monomers, whereby the (meth)acrylic block copolymer (A) can be isolated.

<Compound (B)>

In the practice of the invention, not only the above-mentioned (meth)acrylic block copolymer (A) alone but also a composition containing the (meth) acrylic block copolymer together with another compound(s) or the like may be used, as mentioned above. In particular, a composition comprising the (meth) acrylic block copolymer (A) and a compound (B) containing, on an average, 1.1 or more reactive functional groups (Y) reactive with the reactive functional group (X) in the (meth)acrylic block copolymer (A) per molecule is preferably used. The number of reactive functional groups (Y) so referred to herein is the average number of the reactive functional groups (Y) occurring in the compound (B) as a whole.

In the practice of the invention, the reactive functional group (Y) is not particularly restricted but may be any of those capable of reacting with the reactive functional group (X) in the block copolymer (A). From the viewpoint of the stability of the bonds formed by the reaction, the balance between low temperature reactivity and high temperature reactivity, and the cost of the compound (B), among others, at least one species selected from among epoxy, carboxyl, acid anhydride and oxazoline groups is preferred.

In the practice of the invention, the compound (B) is not particularly restricted but may be any of the compounds containing, on an average, 1.1 or more reactive functional groups (Y) per molecule. For example, there may be mentioned epoxy group-containing compounds such as epoxy resins, epoxy type plasticizers and epoxy group-containing polymers; carboxyl group-containing compounds such as carboxylic acids; acid anhydride group-containing compounds such as carboxylic acid anhydrides; oxazoline group-containing compounds; and reactive functional group (Y)-containing acrylic polymers. Reactive functional group (Y)-containing acrylic polymers are particularly preferred among others. Such acrylic polymers serve as plasticizers and improve the fluidity in molding on the occasion of molding of the composition and, at the same time, the functional group (Y) reacts with the functional group (X) in the (meth)acrylic block copolymer (A) on the occasion of molding and favorably increase the molecular weight of the (meth)acrylic block copolymer (A) or crosslink the same.

Preferably, the compound (B) has a boiling point of not lower than 200˚C, more preferably not lower than 230˚C, still more preferably not lower than 250˚C. Since the composition obtained is molded at elevated temperatures, the use of a compound (B) having a boiling point lower than 200˚C will result in ready evaporation of the compound (B) on the occasion of molding and the molding method and conditions may possibly be restricted.

Furthermore, the compound (B) is preferably a polymer, preferably a polymer having a weight average molecular weight of not higher than 50,000, still more preferably a polymer having a weight average molecular weight of not higher than 30, 000 . When the weight average molecular weight is higher than 50,000, the effect of the polymer as a plasticizer improving the fluidity tends to decrease.

The addition amount of such compounds (B) is preferably 0.1 to 100 parts by weight, more preferably 1 to 50 parts by weight, per 100 parts by weight of the (meth)acrylic block copolymer (A). When the amount of the compound (B) incorporated is smaller than 0.1 part by weight, the crosslinking reaction with the (meth) acrylic block copolymer (A) will not proceed to a sufficient extent and the thermal stability of the moldings may become insufficient in certain instances

and, when it is greater than 100 parts by weight, the crosslinking reaction will proceed to an excessive extent and the elongation and/or flexibility of the moldings may be impaired in some instances.

It is also possible to use, as the compound (B), two or more compound differing in reactive functional group (Y) in combination or a compound containing two or more reactive functional groups (Y) in each molecule. In this case, however, it is preferred that different reactive functional groups (Y) will not react with each other, hence the reaction thereof with the reactive functional group (X) will not be disturbed.

The number of reactive functional groups (Y) in the compound (B) varies depending on the reactivity of the reactive functional group (Y) and the site and mode of occurrence of each reactive functional group (Y) contained therein. Therefore, the number may be selected according to need. It is preferably not smaller than 1.1 on an average, more preferably not smaller than 1.5 on an average, particularly preferably not smaller than 2.0 on an average, per molecule of the compound (B). When the number is smaller than 1.1, the effect of the compound (B) as a reactant for increasing the molecular weight of the acrylic block copolymer or as a crosslinking agent for the copolymer will be low and the improvement in thermal stability of the acrylic block copolymer (A) tends to be insufficient.

When the reactive functional group (Y) is an epoxy group, the epoxy group-containing compound (B) is not particularly restricted but may be any of those compounds containing, on an average, not smaller than 1.1 epoxy groups per molecule. Thus, such compound (B) includes, but is not limited to, epoxy group-containing compounds in common use, for example bisphenol A-based epoxy resins, bisphenol F-based epoxy resins, bisphenol AD-based epoxy resins, bisphenol S-based epoxy resins, epoxy resins derived from these by hydrogenation, glycidyl ester-based epoxy resins, glycidylamine-based epoxy resins, alicyclic epoxy resins, novolak-based epoxy resins, urethane bond-containing urethane-modified epoxy resins, fluorinated epoxy resins, polybutadiene- or NBR-containing rubber-modified epoxy resins, tetrabromobisphenol A glycidyl ether and like flame retardant epoxy resins, other epoxy resins, polyhydric alcohol glycidyl ethers, polybasic acid glycidyl esters such as epoxidized soybean oil, epoxidized linseed oil and epoxidized fatty acid alkyl esters and like epoxy plasticizers, such epoxy group-containing polymers as species of Bondfast (product name, products of Sumitomo Chemical Co.) and of ARUFON (product name, products of Toagosei Chemical Industry Co.) ; and epoxy group-containing polymers derived from unsaturated polymers such as olefin polymers, styrenic polymers, acrylic polymers and petroleum resins, among others. More specifically, Toagosei's ARUFON (registered trademark) XG4000, ARUFON UG4000, ARUFON XG4010, ARUFON UG4010, ARUFON XD945, ARUFON XD950, ARUFON UG4030, ARUFON UG4070 and so forth can be adequately used. These are all acryl, acrylate/styrene or like acrylic polymers and contain 1.1 or more epoxy groups per molecule. These epoxy group-containing compounds may be used singly or two or more of them may be used in combination.

When the reactive functional group (Y) is a carboxyl group, the carboxyl group-containing compound (B) is not particularly restricted but may be any of those compounds containing, on an average, 1.1 or more carboxyl groups per molecule. Thus, such compound (B) that can be used includes, but is not limited to, carboxyl group-containing compounds in ordinary use, for example adipic acid, itaconic acid, iminodiacetic acid, glutaric acid, succinic acid, citraconic acid, oxalic acid, tartaric acid, sebacic acid, azelaic acid, decanedicarboxylic acid, dodecanedicarboxylic acid, cyclohexanedicarboxylic acid, trans-1,2-cyclohexanediaminetetraacetic acid, fumaric acid, brassylic acid (n11), malonic acid (n1), citraconic acid, maleic acid, isophthalic acid, terephthalic acid, 1,4-naphthalenedicarboxylic acid, 2, 6-naphthalenedicarboxylic acid, 5-hydroxyisophthalic acid, orthophthalic acid, 3,3',4,4'-benzophenonetetracarboxylic acid, diphenoxyethanedicarboxylic acid, biphenyldicarboxylic acid, diphenyl ether-dicarboxylic acid, diphenyl sulfone-dicarboxylic acid, diphenyl ketone-dicarboxylic acid, anthracenedicarboxylic acid, α, β-bis (4-carboxyphenoxy) ethane, trimellitic acid, pyromellitic acid, imidazole-4,5-dicarboxylic acid, chelidamic acid, 2,3-pyrazinedioarboxylic acid, citric acid, glycyrrhitic acid, aspartic acid, glutamic acid, malic acid, and carboxyl group-containing polymers such as species of AQUPEC (product name, products of Sumitomo Seika Chemicals Co.), ACTFLOW (product name, products of Soken Chemical & Engineering Co.) and ARUFON (product name, products of Toagosei Chemical Industry Co.) ; and carboxyl group-containing polymers derived from such unsaturated polymers as olefinic polymers, styrenic polymers, acrylic polymers and petroleum resins, among othes. These carboxyl group-containing compounds may be used singly or two or more of them may be used in combination.

When the reactive functional group (Y) is an acid anhydride group, the acid anhydride group-containing compound (B) is not particularly restricted but may be any of those compounds containing, on an average, 1.1 or more acid anhydride groups per molecule. Thus, it includes, but is not limited to, 3,3',4,4'-biphenyltetracarboxylic acid dianhydride, 3,3',4,4'-benzophenonetetracarboxylic acid dianhydride, pyromellitic acid dianhydride, 3,3',4,4'-diphenyl sulfone-tetracarboxylic acid dianhydride, maleinated methylcyclohexene-tetrabasic acid anhydride, isobutylene-maleic anhydride copolymers, and such polymers as BONDINE (product name, product of Sumitomo-Atofina) and like acid anhydride group-containing polymers, among others. These acid anhydride group-containing compounds may be used singly or two or more of them may be used in combination.

When the reactive functional group (Y) is an oxazoline group, the oxazoline group-containing compound (B) is not particularly restricted but may be any of those compounds containing, on an average, 1.1 or more oxazoline groups per molecule. Thus, it includes, but is not limited to, 2,2'-bis (2-oxazolin), 2,2'-methylenebis(2-oxazoline), 2,2'-ethylenebis

(2-oxazoline), 2,2'-trimethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4,4'-dimethyl-2-oxazoline), 2,2'-p-phenylenebis(2-oxazoline), 2,2'-m-phenylenebis(2-oxazoline), 2,2'-m-phenylenebis(4,4'-dimethyl-2-oxazoline), 1,3-phenylenebisoxazoline, 1,4-phenylenebisoxazoline, bis(2-oxazolinylcyclohexane) sulfide, bis(2-oxazolinylnorbornane) sulfide and like polyfunctional oxazoline compounds and, further, oxazoline group-containing polymers such as EPOCROS (product name, product of Nippon Shokubai Co.). These oxazoline group-containing compounds may be used singly or two or more of them may be used in combination.

Among the epoxy group-containing compounds (B) mentioned above, bisphenol A-based epoxy resins, polyhydric alcohol glycidyl ethers, polybasic acid glycidyl esters, namely epoxidized soybean oil, epoxidized linseed oil and epoxidized fatty acid alkyl esters and like epoxy type plasticizers and epoxy group-containing polymers such as Toagosei's ARUFON (registered trademark) are preferred examples from the viewpoint of compatibility with the (meth)acrylic block copolymer (A), ready availability, cost, low volatility in the step of molding, moldability improving effect and mechanical characteristics of the moldings obtained, among others.

Among the carboxyl group-containing compounds mentioned above, trimellitic acid and such carboxyl group-containing polymers as ACTFLOW (product name, product of Soken Chemical & Engineering Co.) and ARUFON (product name, product of Toagosei Chemical Industry Co.) are preferred examples. Among the acid anhydride group-containing compounds mentioned above, 3,3',4,4'-biphenyltetracarboxylic acid dianhydride and pyromellitic acid dianhydride are preferred examples. Among the oxazoline group-containing compounds mentioned above, 1,3-phenylenebisoxazoline is a preferred example.

The reactive functional group (Y)-containing acrylic polymer is preferably one obtained by polymerizing one or two or more acrylic monomers or by polymerizing one or two or more acrylic monomers and a monomer or monomers other than acrylic monomers.

As the acrylic monomers, there may be mentioned, for example, those acrylate esters and methacrylate esters mentioned hereinabove as examples of the monomer constituting the methacrylic polymer block (a). Among them, one or a combination of two or more of n-butyl acrylate, ethyl acrylate and 2-methoxyethyl acrylate is preferably used.

The above-mentioned monomers other than acrylic monomers are not particularly restricted provided that they are monomers copolymerizable with acrylic monomers. For example, vinyl acetate, styrene and the like can be used.

The proportion of the acryloyl group-containing monomer component(s) relative to all the monomer components in the compound (B) is preferably not lower than 70% by weight. When the proportion is below 70% by weight, the weather resistance tends to lower and the compatibility with the (meth)acrylic block copolymer (A) also tends to decrease and, further, the moldings tend to be susceptible to discoloration.

The molecular weight of the above-mentioned acrylic polymer is not particularly restricted but is preferably low, namely not higher than 30,000, more preferably 500 to 30,000, particularly preferably 500 to 10,000, as expressed in terms of weight average molecular weight. When the weight average molecular weight is lower than 500, the moldings tend to be sticky. When, on the other hand, the weight average molecular weight is above 30, 000, the plasticization of the moldings tends to be insufficient.

The above-mentioned acrylic polymer preferably has a viscosity of not high than 35,000 mPa·s, more preferably not higher than 10,000 mPa·s, particularly preferably not higher than 5,000 mPa·s, as measured at 25°C using a cone-plate rotational viscometer (type E viscometer). When the viscosity is higher than 35,000 mPa·s, the effect of plasticizing the spherical powder tends to decrease. While there is no preferred lower limit to the viscosity, the acrylic polymer generally has a viscosity not lower than 10 mPa·s.

The above-mentioned acrylic polymer preferably has a glass transition temperature $T_g$ of not higher than 100°C, more preferably not higher than 25°C, still more preferably not higher than 0°C, particularly preferably not higher than -30°C, as measured by differential scanning calorimetry (DSC). When the glass transition temperature $T_g$ is higher than 100°C, the effect of improving the moldability as a plasticizer tends to become insufficient and, further, the flexibility of the moldings to be obtained tend to decrease.

The above-mentioned acrylic polymer can be obtained by polymerization by an appropriate method known in the art. The method of polymerization may be properly selected according to need. The polymerization can be carried out, for example, in the manner of suspension polymerization, emulsion polymerization, bulk polymerization, living anionic polymerization, polymerization using a chain transfer agent, living radical polymerization or like controlled polymerization. Controlled polymerization, which gives polymers showing good weather resistance and thermal stability and having a relatively low molecular weight with a narrow molecular weight distribution, is preferred, and the high temperature continuous polymerization technique described below is more preferred from the cost viewpoint, among others.

The above acrylic polymer is preferably obtained by carrying out the polymerization reaction at a temperature of 180 to 350°C. At this polymerization temperature, an acrylic polymer having a relatively low molecular weight can be obtained without using any polymerization initiator or chain transfer agent. Therefore, that acrylic polymer serves as a good plasticizer and shows good weather resistance as well. Specifically, there may be mentioned, for example, the high temperature continuous polymerization technique described in Japanese Kohyo Publication Sho57-502171, Japanese Kokai Publication Sho59-6207, Japanese Kokai Publication Sho60-215007 and WO 01/083619, namely the technique comprising continuously feeding the monomer mixture to a reactor inside set at predetermined temperature and pressure at a certain feeding rate and extracting an amount of the reaction mixture which corresponds to the amount fed.

<Crosslinking reaction>

When crosslinking is required between the (meth) acrylic block copolymer (A) and the compound (B), the method of crosslinking is not particularly restricted but the crosslinked (meth) acrylic copolymer can be obtained, for example, by using a kneader in which a composition comprising the (meth) acrylic block copolymer (A) and the compound (B) can be melted and kneaded with heating.

<Fillers>

The (meth) acrylic block copolymer-based spherical powder of the invention may further contain a filler according to need. The filler includes, but is not particularly restricted to, reinforcing fillers such as asbestos, glass fibers, mica, graphite, diatomaceous earth, clay, silica species (fumed silica, precipitated silica, crystalline silica, fused silica, dolomite, silicic anhydride, hydrous silicic acid, etc.) and carbon black; calcium carbonate, magnesium carbonate, diatomaceous earth, calcined clay, clay, talc, titanium oxide, bentonite, ferric oxide, red iron oxide, fine aluminum powders, flint powders, zinc oxide, activated zinc white, zinc powders, zinc carbonate and shirasu balloons, glass fibers and glass filaments, and active carbon, among others. As organic particles, there may be mentioned particles of (meth) acrylic resins, silicone resins, polypropylene, polyethylene and polystyrene, for instance. These may be used singly or two or more of them may be used in combination. Among them, light calcium carbonate, ground calcium carbonate, colloidal calcium carbonate and like calcium carbonate species are preferred in view of their ready availability and ready dispersibility among particles.

The addition amount of the fillers mentioned above is appropriately adjusted according to the physical characteristics required. Preferably, the fillers are added in an amount of 1.0 to 50 parts by weight, more preferably 5 to 40 parts by weight, particularly preferably 10 to 30 parts by weight, per 100 parts by weight of the polymer. At amounts lower than 1.0 part by weight, no satisfactory effect can be obtained in many cases and, at amounts exceeding 50 parts by weight, the mechanical characteristics of the moldings obtained may be adversely affected in certain cases.

<Additives>

To the spherical powder of the invention, there may be added, according to need, one or more of various additives such as stabilizers, lubricants, flame retardants, pigments, tackifiers and plasticizers in addition to the fillers. Specifically, mention may be made of stabilizers such as hindered phenols, hindered amines and dibutyltin maleate; lubricants such as polyethylene wax, polypropylene wax, montanic acid-based waxes, and beef tallow-derived extremely hardened oil; flame retardants such as decabromobiphenyl and decabromobiphenyl ether; tackifiers such as coumarone-indene resins, phenol resins, terpene resins, high-styrene resins, petroleum hydrocarbons (e.g. dicyclopentadiene resins, alicyclic hydrocarbon resins, unsaturated hydrocarbon resins), polybutene and rosin derivatives; and plasticizers such as adipic acid derivatives, phthalic acid derivatives, glutaric acid derivatives, trimellitic acid derivatives, pyromellitic acid derivatives, polyester plasticizers, glycerol derivatives, epoxy derivative polyester type polymer plasticizers, polyether type polymer plasticizers, acrylic plasticizers, vinyl polymers obtained by polymerization of vinyl monomers by various methods, hydroxybenzoic acid esters, N-alkylbenzenesulfonamides, N-alkyltoluenesulfonamides and like macromolecular plasticizers.

The spherical powder of the invention can also be used in preparing toners and therefore one or more of such additives as pigments, waxes and antistatic agents known in the art may be incorporated therein, without any particular restriction. The addition amount of these additives is also appropriately adjusted according to the physical characteristics required. Generally, however, they are added in an amount of 1.0 to 50 parts by weight, more preferably 5 to 40 parts by weight, particularly preferably 10 to 30 parts by weight, per 100 parts by weight of the polymer. At amounts below 1.0 part by weight, the effects will be unsatisfactory in many cases and, at amounts exceeding 50 parts by weight, the mechanical characteristics of the powder obtained may be adversely affected.

<Process for producing spherical powders>

The spherical powder of the invention can be obtained by heating an aqueous dispersion comprising a solution of the polymer dissolved in a solvent, water, a filler and a dispersant with stirring, although the production process is not particularly restricted. As such production process and apparatus to be used, there may be mentioned the processes

and the apparatus to be used therefor described hereinabove referring to the first aspect of the invention.

In this case, particles can be formed while the state in which inorganic particles and an additive(s) are uniformly dispersed in a polymer solution relatively low in viscosity is maintained; therefore, the inorganic particles, among others, can be dispersed uniformly in the polymer particles as compared with the particles obtained by the conventional process comprising admixing an additive or additives with resin pellets and melting the mixture, followed by grinding. Further, the present process can uniformly disperse inorganic particles and the like in a simple and easier manner than by the conventional production processes. While the above description refers to the addition of an additive(s) on the occasion of obtaining a spherical powder, it is also of course possible to blend the spherical powder once obtained with an additive (s) using such a conventional apparatus as a mixer.

<Spherical powder of the invention>

From the viewpoint of powder flowability and moldability, it is preferred that at least 90% of the total number of powder particles in the (meth) acrylic block copolymer-based spherical powder of the invention preferably have an aspect ratio of 1 to 2 as defined as the ratio between the large axis and small axis of each particle and the average particle diameter be not smaller than 1 μm but smaller than 1,000 μm.

As the aspect ratio of a spherical powder approaches 1, the particle shape approaches a nearly sphere, as mentioned hereinabove, indicating that the particle flowability becomes high. As regards the particles obtainable in the practice of the invention as well, it is preferred that particles amounting to 90% or more of the total number of powder particles have an aspect ratio of 1 to 2, more preferably 1 to 1.8, particularly preferably 1 to 1.5. The aspect ratio of a particle can be calculated by the method described hereinabove using a microscope (KEYENCE's microscope).

The average particle diameter of the spherical powder of the invention is preferably not smaller than 1 μm but smaller than 1, 000 μm. In the case of molding using a fine-structured mold, particle diameters greater than 1,000 μm readily cause molding abnormalities, hence are unfavorable. Particles smaller than 1 μm readily cause static electricity generation etc. and the flowability thereof may be rather deteriorated in certain cases. The above-mentioned particle diameter can be adjusted according to the intended use of the powder by adjusting the amount of the dispersant and the polymer solution/water ratio, among others. In the practice of the invention, a greater amount of the dispersant and a smaller polymer solution/water (v/v) ratio make it possible to obtain particles smaller in particle diameter. When the spherical powder is used in molding using a mold such as powder slush molding, for instance, the particle diameter is preferably not smaller than 20 μm but smaller than 700 μm, more preferably not smaller than 50 μm but smaller than 500 μm, considering the powder flowability and mold filling performance. In the case of use of the spherical powder in the field of toners, the particle diameter is preferably not smaller than 1 μm but smaller than 50 μm, more preferably not smaller than 3 μm but smaller than 10 μm.

In the practice of the invention, the average particle diameter of a spherical powder is the average value on the weight basis as determined by sieving the spherical powder in a dry state using standard sieves and separately weighing the fractions belonging to the respective particle diameter ranges, as described hereinabove. The average particle diameter can be determined, for example, using an electromagnetic sieve shaker (AS200BASIC (60 Hz), product of Retsch Co., Ltd.).

The spherical powder obtained preferably has, on the particle surface, pores with an inside diameter of 1 to 50% of the particle diameter. The inside diameter is more preferably 3 to 40%, particularly preferably 5 to 25%, of the particle diameter. In the practice of the invention, the ratio between the particle diameter and the inside diameter can be determined by observation under a microscope.

(EFFECT OF THE INVENTION)

The process for producing spherical polymer powders according to the first aspect of the invention, which has the constitution described hereinabove, can give polymer powder particles close to a nearly sphere in shape, small in particle diameter and high in flowability and therefore suited for use as a molding material in a simple and easy manner.

The spherical powder according to the second aspect of the invention, which has the constitution described hereinabove, can be a (meth) acrylic copolymer-based spherical powder close to a nearly sphere in shape, small in particle diameter and high in flowability and therefore suited for use as a molding material.

BEST MODE FOR CARRYING OUT THE INVENTION

The following examples now describe the present invention in further detail. These examples are, however, by no means limitative of the scope of the invention.

In the examples, the following abbreviations are used.

BA: n-butyl acrylate
MMA : methyl methacrylate
TBA: tert-butyl acrylate
EA: ethyl acrylate

The molecular weight and molecular weight distribution of each block copolymer described in this example section were measured using Waters' GPC system (column; Showa Denko' s Shodex K-804 (polystyrene gel), mobile phase: chloroform). The number average molecular weight was expressed on the polystyrene equivalent basis.

The respective particle diameters and the average particle diameter of the spherical powder were measured using an electromagnetic sieve shaker (AS200BASIC (60 Hz), product of Retsch Co., Ltd.). Among them, the average particle diameter was measured specifically in the following manner. First, using standard sieves with sieve openings of 4,000 μm, 2,000 μm, 1, 000 μm, 710 μm, 500 μm, 300 μm, 212 μm, 100 μm and 53 μm, respectively, vibration sieving was carried out on an electromagnetic sieve shaker (AS200BASIC (60 Hz), product of Retsch Co., Ltd.) for 10 minutes. The oversize particle fractions remaining on the respective sieves were recovered and weighed. On that occasion, the particles greater than 4,000 μm were excluded. The weight of the particles on the sieve with a sieve opening of 2,000 μm was designated as W3000 and the average particle diameter was calculated as (4,000 + 2, 000) /2 = 3, 000 μm. In the same manner, for the fraction on the 1, 000-μm sieve, the weight thereof was designated as W1500 and the particle diameter regarded as 1,500 μm; for the fraction on the 710-μm sieve, the weight as W855 and the particle diameter as 855 μm; for the fraction on the 500-μm sieve, the weight as W605 and the particle diameter as 605 μm; for the fraction on the 300-μm sieve, the weight as W400 and the particle diameter as 400 μm; for the fraction on the 212-μm sieve, the weight as W256 and the particle diameter as 256 μm; for the fraction on the 100-μm sieve, the weight as W156 and the particle diameter as 156 μm; for the fraction on the 53-μm sieve, the weight as W76.5 and the particle diameter as 76.5 μm; and for the fraction not larger in particle diameter than 53 μm, the weight as W26.5 and the particle diameter as 26.5 μm. The sum of the respective weights was designated as WT, and the weight average diameter $D_{ave}$ (μm) was calculated as follows:

$$D_{ave} = (3000xW3000 + 1500xW1500 + 855xW855 + 605xW605 + 400xW400 + 256xW256 + 156xW156 + 76.5xW76.5 + 26.5xW26.5)/WT$$

The aspect ratio of the spherical powder was determined in the following manner. Photographs with a magnification of 100 to 200 were taken using a microscope (KEYENCE' s microscope), and the longest portion of each particle was measured as the large axis and the longest portion perpendicular to the large axis line as the small axis, and the large axis/small axis ratio was evaluated as the aspect ratio. For about 300 particles, the respective aspect ratios were evaluated. The proportion of powder particles with an aspect ratio of 1 to 2 relative to the total number of particles was calculated as [(number of particles with an aspect ratio of 1 to 2)/(total number of particules evaluated)] x 100 -%).

Each spherical powder was observed and the photomicrograph thereof was taken using a Hitachi model S-800 microscope.

<Angle of repose>

The angle of repose was evaluated by using a Hosokawa Micron's powder tester, allowing particles gradually, from a height of 11 cm, onto a disk horizontally positioned over the top of a desk in the manner shown in Fig. 7 and measuring the base angle (i.e. angle of repose) of the cone formed by the particles. The angle of repose is an indicator of the tendency of a mountain of powder particles toward collapse and of the flowability of powder particles in a static state; a smaller angle or repose indicates that the powder flowability is better and, therefore, every corner of the mold can also be filled with the particles.

<Apparent specific gravity>

Like the angle of repose, the apparent specific gravity was measured using Hosokawa Micron' s powder tester in the manner shown in Fig. 7. A container was filled with a known volume of particles and the apparent specific gravity was calculated by dividing the weight of the particles by the capacity of the container. The apparent specific gravity is an indicator of the extent of packing with the resin. The use of a resin powder with a low apparent specific gravity on the occasion of molding tends to lead to formation of moldings high in void content.

<ICI flow time>

In ICI flow measurements, a funnel-like metal container shown in Fig. 8 is filled with a certain weight of a resin powder, the bottom plate is then taken off, and the time required for discharge of the whole amount of the powder is measured. The ICI flow is an indicator of the flowability of powder particles in a dynamic state of the particles; a shorter ICI flow time indicates that the powder flowability of the particles is better and, therefore, particles can promptly reach every corner of the mold.

(Production Example 1)

<(Meth)acrylic block copolymer synthesis>

The following procedure was carried out for obtaining a (meth)acrylic block copolymer. A 5-liter pressure reactor, after replacement of the inside atmosphere by nitrogen, was charged with 6.88 g (0.048 mol) of copper bromide, 784 g (6.12 mol) of BA and 28.70 g (0.224 mol) of TBA, and stirring was started. Then, a solution of 13.20 g (0.0369 mol) of diethyl 2,5-dibromoadipate (initiator) in 71.40 g of acetonitrile (after bubbling with nitrogen) was added, and the whole was stirred for 30 minutes while the solution temperature was raised to 75˚C. After arrival of the solution temperature at 75˚C, 0.832g (0.0048 mol) of pentamethyldiethylenetriamine (ligand) was added to initiate the polymerization to give an acrylic polymer block.

After the start of polymerization, the polymerization mixture was sampled at timed intervals; the sample size was about 10 mL per sampling. Each sample solution was analyzed by gas chromatography and the conversions of BA and TBA were determined. During the polymerization, the rate of reaction was controlled by adding pentamethyldiethylenetriamine at any time as needed. A total of two portions (1.66 g in total) of pentamethyldiethylenetriamine were added during the acrylic polymer block polymerization.

At the time when the conversion of BA was 99.1% and the conversion of TBA was 99.3%, 483.0 g (4.82 mol) of MMA, 78.40 g (0.783 mol) of EA, 4.75 g (0.048 mol) of copper chloride, 0.832 g (0.0048 mol) of pentamethyldiethylenetriamine and 1,040 g of toluene (after bubbling with nitrogen) were added to initiate the methacrylic polymer block polymerization.

At the time of charging of MMA and EA, the reaction mixture was sampled, and the conversions of MMA and EA were determined based on the data obtained on that occasion of sampling. After charging of MMA and EA, the inside temperature was set at 85˚C. During the polymerization, the rate of reaction was controlled by adding pentamethyldiethylenetriamine at any time as needed. A total of six portions (4.99 g in total) of pentamethyldiethylenetriamine were added during the methacrylic polymer block polymerization. After arrival of the conversion of MMA at 95.9%, 250,000 g of toluene was added and the reactor was cooled to terminate the reaction. The (meth) acrylic block copolymer obtained was analyzed by GPC; the number average molecular weight Mn was 53, 100 and the molecular weight distribution Mw/Mn was 1.46.

Toluene was added to the reaction mixture obtained to make the polymer concentration 25% by weight. To the resulting solution was added 21.9 g of p-toluenesulfonic acid, the reactor inside atmosphere was replaced with nitrogen and the contents were stirred at 30˚C for 3 hours. The reaction mixture was sampled and, after confirming that the mixture was colorless and transparent, 65.7 g of Showa Chemical Industry's Radiolite #3000 was added. The reactor inside was pressurized to 0.1 to 0.4 MPaG with nitrogen, and the solid matter was separated using a pressure filter (filtration area 113 $cm^2$, Advantec' s KST-142) equipped with a polyester felt filtering material.

To about 4.50 kg of the block copolymer solution after filtration was added 13.1 g of KYOWAAD 500SH and, after nitrogen substitution of the reactor inside, the contents were stirred at 30˚C for 1 hour. The reaction mixture was sampled and, after confirmation of the neutrality of the solution, the reaction was regarded as being complete. Then, the reactor was pressurized to 0.1 to 0.4 MPaG with nitrogen, and the solid matter was separated using the above-mentioned pressure filter equipped with a polyester felt filtering material to give a (meth)acrylic block copolymer-containing solution.

(Production Example 2)

<Styrene-isobutylene-styrene (SIBS) block copolymer synthesis>

A 2-liter reactor equipped with a stirrer was charged with 370 g of 1-chlorobutane (dried over molecular sieves), 192 g of hexane (dried over molecular sieves) and 0.29 g of p-dicumyl chloride. After cooling the reaction vessel to -70˚C, 0.218 g of N,N-dimethylacetamide and 84.4 g of isobutylene were added. Further, 8.5 g of titanium tetrachloride was added to initiate the polymerization, and the reaction was continued for 2 hours while the solution was stirred at -70˚C. Then, 40.8 g of styrene was added to the reaction mixture, and the reaction was further continued for 30 minutes

to give a polymer solution.

The polymer solution obtained was poured into a large amount of water to thereby terminate the reaction. Thereafter, the polymer solution phase was separated from the aqueous phase using a separatory funnel. The polymer solution phase was washed twice with water in the same manner and, after confirmation of the neutrality of the aqueous phase, the polymer solution phase was discharged. A SIBS block copolymer-containing polymer solution was thus obtained. Isoprene was added to the polymer solution obtained to adjust the solid matter concentration to 15%. GPC analysis revealed that the number average molecular weight was 100,000 and the molecular weight distribution was 1.14.

(Example 1)

A 3-liter pressure stirring device was charged with 450 ml of pure water and 600 ml of the polymer solution obtained in Production Example 1 (solid matter concentration 25%), 1.5 g (75 g as 2% aqueous solution) of water-soluble cellulose ether (product name: 90SH-100(R), product of Shin-Etsu Chemical Co.) with a cloud point of 90˚C was added and the stirring device was then tightly closed. The contents were stirred at 900 rpm using a two-stage four-inclined paddle impeller while the temperature was raised by means of a jacket. The P/V ratio on that occasion was 3.42 kW/$m^3$. After arrival of the stirring vessel inside temperature at 90˚C, the solvent gas was introduced into a condenser for successive solvent recovery. The inside pressure was adjusted while taking care to avoid foaming and, after arrival of the inside pressure at the saturated water vapor pressure at the stirring vessel inside temperature, the heating and solvent evaporation were terminated and, after lowering of the inside temperature to room temperature, the stirring was also terminated, and the resin slurry formed within the stirring vessel was recovered. The resin slurry recovered was suction filtered using a Kiriyama funnel and No. 2 filter paper, and the thus-recovered solid matter was dried for a whole day and night under vacuum to give dried particles. In the spherical polymer powder obtained, particles having a particle diameter of 0.05 to 0.3 mm amounted to 90% by weight of the whole spherical polymer powder and the average particle diameter of the spherical powder was 190 μm. Further, particles with an aspect ratio within the range of 1 to 2 amounted to 96% of the total number of particles. The dried powder particles obtained were weighed, and a silica powder (product name: Microcrystalline Soft Silica A-10, product of Tatsumori LTD., average particle diameter 2.6 μm) was added, as a filler, to the powder particles at ordinary temperature (about 25˚C) in an amount such that the silica powder weight amounted to 6 parts relative to the weight of the dried powder particles, and the resulting mixture was evaluated for powder characteristics (Table 1).

(Example 2)

The same 3-liter pressure stirring device as used in Example 1 was charged with 450 ml of pure water and 600 ml of polymer solution (solid matter concentration 25%) obtained in Production Example 1, 1.5 g (75 g as 2% aqueous solution) of a polyvinyl alcohol type surfactant (product name: Gohsenol GH-23(R), product of Nippon Synthetic Chemical Industry) was added, and the temperature was raised by blowing steam into the stirring vessel from the lower part thereof with stirring at 800 rpm. On that occasion, the P/V ratio was 2.40 kW/$m^3$. The solvent gas resulting from evaporation with the increase in temperature was introduced into a condenser for successive solvent recovery and, 5 minutes after arrival at 100˚C, the steam feeding was stopped. The stirring vessel was cooled by passing water through the jacket and, after lowering of the liquid temperature to 60˚C, the stirring was stopped. The resin slurry formed in the stirring vessel was then recovered. The residual solvent content in the spherical powder as recovered was 15,000 ppm. The polymer powder recovered was dried in the same manner as in Example 1 to give dried particles. In the spherical powder obtained, particles having a particle diameter of 0.05 to 0.3 mm amounted to 90% by weight of the whole spherical powder and the average particle diameter of the spherical powder was 190 μm. Further, particles with an aspect ratio within the range of 1 to 2 amounted to 95% of the total number of particles. The dried powder particles obtained were weighed, and a silica powder (product name: Microcrystalline Soft Silica A-10, product of Tatsumori LTD., average particle diameter 2.6 μm) was added, as a filler, to the powder particles at ordinary temperature (about 25˚C) in an amount such that the silica powder weight amounted to 6 parts relative to the weight of the dried powder particles, and the resulting mixture was evaluated for powder characteristics (Table 1).

(Example 3)

The same 3-liter pressure stirring device as used in Production Example 1 was charged with 600 ml of pure water and 600 ml of the polymer solution obtained in Production Example 2 (solid matter concentration 15%), 1.5 g of water-soluble cellulose ether (product name: 90SH-100(R), product of Shin-Etsu Chemical Co.) with a cloud point of 90˚C was added and the stirring device was then tightly closed. The contents were stirred at 12,000 rpm while the temperature was raised by means of a jacket. The P/V ratio on that occasion was 7.10 kW/$m^3$ on average. After arrival of the stirring vessel inside temperature at 90˚C, the solvent gas was introduced into a condenser for successive solvent

recovery. The inside pressure was adjusted while taking care to avoid foaming and, after arrival of the inside pressure at the saturated water vapor pressure at the stirring vessel inside temperature, the heating and solvent evaporation were terminated and, after lowering of the inside temperature to room temperature, the stirring was also terminated, and the resin slurry formed within the stirring vessel was recovered. The residual solvent in the spherical polymer powder contained in the recovered resin slurry amounted to 43,000 ppm. The resin slurry recovered was again returned to the stirring vessel and, after tight closure, subjected to steam stripping. The steam stripping was carried out by blowing steam into the stirring vessel from the lower part thereof while the temperature was maintained at 100 to 110˚C for 10 minutes. The temperature was again lowered, and the resin slurry was recovered and measured for the residual solvent content in the resin; the solvent had been removed to a residual solvent content of about 5,700 ppm. This resin slurry was dehydrated by centrifugation and dried in an atmosphere of 150˚C in a box type drier for 5 hours. The residual solvent content in the thus-obtained spherical polymer powder was 90 ppm. In the dried spherical powder, particles having a particle diameter of 0.05 to 0.3 mm amounted to 90% by weight of the whole spherical polymer powder and the average particle diameter of the spherical powder was 180 μm. Further, particles with an aspect ratio within the range of 1 to 2 amounted to 90% of the total number of particles.

(Example 4)

A resin slurry was recovered by solvent evaporation carried out in the same manner as in Example 3 except that a 3-liter pressure stirring device was charged with 600 ml of pure water and 600 ml of the polymer solution obtained in Production Example 2 (solid matter concentration 15%), 1.08 g of polyethylene glycol monostearate with a cloud point of 100˚C or higher and 0.11 g of ethylenebisstearamide were added, and steam stripping was carried out at a temperature of 140˚C. The residual solvent content in the resin obtained by centrifugation was measured to be about 200 ppm. In the spherical powder obtained after drying, the residual solvent content was 20 ppm, particles having a particle diameter of 1.0 to 2.0 mm amounted to 90% by weight of the whole spherical polymer powder and the average particle diameter of the spherical powder was 1,500 μm. Further, particles with an aspect ratio within the range of 1 to 2 amounted to 92% of the total number of particles.

(Example 5)

The same 3-liter pressure stirring device as used in Example 1 was charged with 450 ml of pure water and 600 ml of polymer solution (solid matter concentration 25%) obtained in Production Example 1, 1.5 g (15 g as 10% aqueous solution) of calcium phosphate (product name: TCP-10, product of TAIHEI CHEMICAL INDUSTRIAL CO., LTD.) as a dispersant was added, and the solvent was evaporated off by blowing steam into the stirring vessel from the lower part thereof with stirring at 1,000 rpm in the same manner as in Example 2, and then the product was separated and dried to give dried particles. On the occasion of solvent evaporation, the P/V ratio was 4.70 $kW/m^3$ on average. In the spherical powder obtained, particles having a particle diameter of 0.05 to 0.4 mm amounted to 92% of the whole powder by weight comparison and the average particle diameter thereof was 250 μm. Further, particles with an aspect ratio within the range of 1 to 2 amounted to 93% of the total number of particles. The dried powder particles obtained were weighed, and a silica powder (product name: Microcrystalline Soft Silica A-10, product of Tatsumori LTD., average particle diameter 2. 6 μm) was added, as a filler, to the powder particles at ordinary temperature (about 25˚C) in an amount such that the silica powder weight amounted to 6 parts relative to the weight of the dried powder particles, and the resulting mixture was evaluated for powder characteristics (Table 1).

(Example 6)

The same 3-liter pressure stirring device as used in Example 1 was charged with 450 ml of pure water and 600 ml of polymer solution (solid matter concentration 25%) obtained in Production Example 1, 2.16 g of polyethylene glycol monostearate (product name: NONION K15.4, product of NOF CORPORATION) with a cloud point of 100˚C or higher and 30 g of calcium carbonate (product name: Brilliant 1500, product of Shiraishi Kogyo Kaisha, Ltd.) were added, and the solvent was evaporated off by blowing steam into the stirring vessel from the lower part thereof with stirring at 1,000 rpm in the same manner as in Example 2, and then the product was separated and dried to give dried particles . In the spherical powder obtained, particles having a particle diameter of 0.04 to 0.2 mm amounted to 93% of the whole powder and the average particle diameter thereof was 130 μm. Further, particles with an aspect ratio within the range of 1 to 2 amounted to 96% of the total number of particles. The powder particles obtained were evaluated for powder characteristics (Table 1).

(Example 7)

The solvent was evaporated off in the same manner as in Example 2 except that the rotating speed of stirring was changed to 2, 000 rpm, and then the product was separated and dried to give dried particles. On the occasion of solvent evaporation, the P/V ratio was 37.6 kW/$m^3$ on average. In the spherical powder obtained, particles having a particle diameter of 0.01 to 0.05 mm amounted to 95% of the whole powder by weight comparison and the average particle diameter thereof was 35 μm. Further, particles with an aspect ratio within the range of 1 to 2 amounted to 93% of the total number of particles. The dried powder particles obtained were weighed, and a silica powder (product name: Microcrystalline Soft Silica A-10, product of Tatsumori LTD., average particle diameter 2.6 μm) was added, as a filler, to the powder particles at ordinary temperature (about 25˚C) in an amount such that the silica powder weight amounted to 6 parts relative to the weight of the dried powder particles, and the resulting mixture was evaluated for powder characteristics (Table 1).

(Example 8)

The same 3-liter pressure stirring device as used in Example 1 was charged with 450 ml of pure water and 600 ml of polymer solution (solid matter concentration 25%) obtained in Production Example 1, 60 g of calcium carbonate (product name: Brilliant 1500, product of Shiraishi Kogyo Kaisha, Ltd.) was added, and the solvent was evaporated off by blowing steam into the stirring vessel from the lower part thereof with stirring at 1,000 rpm in the same manner as in Example 1, and then the product was separated and dried to give dried particles. In the spherical powder obtained, particles having a particle diameter of 0.04 to 0.35 mm amounted to 93% of the whole powder by weight comparison and the average particle diameter thereof was 250 μm. Further, particles with an aspect ratio within the range of 1 to 2 amounted to 96% of the total number of particles. The powder particles obtained were evaluated for powder characteristics (Table 1).

(Example 9)

A 3-liter pressure stirring device was charged with 600 ml of pure water and 300 ml of the polymer solution obtained in Production Example 1 (solid matter concentration 25%), 3.75 g (125 g as 3% aqueous solution) of a polyvinyl alcohol type surfactant (product name: Gohsenol KH-17, product of Nippon Synthetic Chemical Industry) was added and the stirring device was then tightly closed. The contents were stirred at 900 rpm using a two-stage four-inclined paddle impeller while the temperature was raised by means of a jacket. The P/V ratio on that occasion was 2.60 kW/$m^3$. After arrival of the stirring vessel inside temperature at 90˚C, the solvent gas was introduced into a condenser for successive solvent recovery. The inside pressure was adjusted while taking care to avoid foaming and, after arrival of the inside pressure at the saturated water vapor pressure at the stirring vessel inside temperature, the heating and solvent evaporation were terminated and, after lowering of the inside temperature to room temperature, the stirring was also terminated, and the resin slurry formed within the stirring vessel was recovered. The resin slurry recovered was suction filtered using a Kiriyama funnel and No. 2 filter paper, and the thus-recovered solid matter was dried for a whole day and night under vacuum to give dried particles. In the spherical powder obtained, particles having a particle diameter of 0.05 to 0.5 mm amounted to 95% by weight of the whole spherical powder and the average particle diameter of the spherical powder was 220 μm. Further, particles with an aspect ratio within the range of 1 to 2 amounted to 98% of the total number of particles. The dried powder particles obtained were weighed, and a silica powder (product name: Microcrystalline Soft Silica A-10, product of Tatsumori LTD., average particle diameter 2.6 μm) was added, as a filler, to the powder particles at ordinary temperature (about 25˚C) in an amount such that the silica powder weight amounted to 2 parts relative to the weight of the dried powder particles, and the resulting mixture was evaluated for powder characteristics (Table 1).

(Example 10)

The same 3-liter pressure stirring device as used in Example 1 was charged with 600 ml of pure water and 300 ml of polymer solution (solid matter concentration 25%) obtained in Production Example 1, 3.75 g (125 g as 3% aqueous solution) of a polyvinyl alcohol type surfactant (product name: Gohsenol KH-20, product of Nippon Synthetic Chemical Industry) was added, and the temperature was raised by blowing steam into the stirring vessel from the lower part thereof with stirring at 800 rpm. On that occasion, the P/V ratio was 2.65 kW/$m^3$. The solvent gas resulting from evaporation with the increase in temperature was introduced into a condenser for successive solvent recovery and, 5 minutes after arrival at 100˚C, the steam feeding was stopped. The stirring vessel was cooled by passing water through the jacket and, after lowering of the liquid temperature to 60˚C, the stirring was stopped. The resin slurry formed in the stirring vessel was then recovered. The residual solvent content in the spherical powder as recovered was 11,000 ppm.

The polymer powder recovered was dried in the same manner as in Example A to give dried particles. In the spherical powder obtained, particles having a particle diameter of 0.05 to 0.5 mm amounted to 95% by weight of the whole spherical powder and the average particle diameter of the spherical powder was 230 μm. Further, particles with an aspect ratio within the range of 1 to 2 amounted to 95% of the total number of particles. The dried powder particles obtained were weighed, and an additive (product name: MA1002, product of Nippon Shokubai Co., average particle diameter 2 μm) was added to the powder particles at ordinary temperature (about 25˚C) in an amount such that the powder weight amounted to 2 parts relative to the weight of the dried powder particles, and the resulting mixture was evaluated for powder characteristics (Table 1).

(Comparative Example 1)

The solvent was evaporated off in the same manner as in Example 2 except that the rotating speed of stirring was changed to 300 rpm. On the occasion of solvent evaporation, the P/V ratio was 0.13 $kW/m^3$ on average. As a result, the resin solidified with the evaporation of the solvent and formed one large lump of mass. Thus, any spherical particles with a particle diameter smaller than 1 mm could not be obtained.

(Comparative Example 2)

60 g of calcium carbonate (product name: Brilliant 1500, product of Shiraishi Kogyo Kaisha, Ltd.) was admixed with 600 g of the polymer solution obtained in Production Example 1, and the mixture was poured into a metal vat to a liquid depth of about 5 mm and air-dried at room temperature for 24 hours and then dried in a drier at 90˚C for 24 hours. After solvent evaporation in this manner, a resin sheet with a thickness of about 2 mm was formed. The sheet obtained was cut to about 1 cm squares using scissors and subjected to grinding treatment using a grinder (Mitsui Mining' s centrifugal mill UCM-150). In the spherical powder obtained, particles having a particle diameter of 0.1 to 0.5 mm amounted to 78% of the whole powder by weight comparison and particles having a particle diameter of 1 to 1, 000 μm amounted to 95%. On the other hand, particles with an aspect ratio of not higher than 2 were less than 40% of the total number of particles, and most of them were long and narrow particles . The dried powder particles obtained were weighed, and a silica powder (product name: Microcrystalline Soft Silica A-10, product of Tatsumori LTD., average particle diameter 2.6 μm) was added, as a filler, to the powder particles at ordinary temperature (about 25˚C) in an amount such that the silica powder weight amounted to 6 parts relative to the weight of the dried powder particles, and the resulting mixture was evaluated for powder characteristics (Table 1).

Table 1

| | Angle of repose (degree) | Apparent specific gravity (g/ml) | ICI flow time (sec.) |
|---|---|---|---|
| Example 1 | 36.9 | 0.564 | 4.91 |
| Example 2 | 36.5 | 0.543 | 5.35 |
| Example 5 | 33.7 | 0.583 | 4.65 |
| Example 6 | 37.7 | 0.544 | 5.26 |
| Example 7 | 38.8 | 0.533 | 5.39 |
| Example 8 | 32.9 | 0.629 | 4.08 |
| Example 9 | 35.0 | 0.610 | 4.05 |
| Example 10 | 34.8 | 0.622 | 3.98 |
| Compar.Ex. 2 | 42.3 | 0.453 | 11.90 |

The results of evaluation of the spherical powders obtained in Examples 1 and 2 and Examples 5 to 10 and the powder of Comparative Example 1 with respect to angle of repose, apparent specific gravity and ICI flow time are shown in Table 1. As is evident from Table 1, the spherical powders obtained in Examples 1 and 2 and Examples 5 to 10 are small in angle of repose and short in ICI flow time, among others, and powders thereof tend to readily collapse and flow, as compared with Comparative Example 1. Further, the apparent specific gravity values in Examples 1 and 2 and Examples 5 to 10 are higher, indicating that each powder, when fed to the mold, can fill the mold, leaving little space. These differences are supposed to be due to the differences in powder morphology. The spherical powders of the invention are thus suited for use for molding purposes, among others.

(Particle morphology comparison)

Fig. 1 is a photomicrograph of the spherical powder of the invention as obtained in Example 1, and Fig. 2 is a photomicrograph showing, in section, the particle inside thereof. Fig. 3 is a photomicrograph of conventional polyvinyl chloride particles obtained by suspension polymerization, and Fig. 4 is a photomicrograph showing, in section, the particle inside thereof. Further, Fig. 5 is a photomicrograph of conventional polyurethane particles obtained by reacting in a liquid-liquid dispersion system, and Fig. 6 is a photomicrograph showing, in section, the particle inside thereof. In inspecting the particle inside structure as shown in Fig. 2, Fig. 4 or Fig. 6, particles are mixed with a twin pack type epoxy resin-based adhesive (product name: Hi-Super 5, product of Cemedine Co.), and a commercial gelatin capsule (Gelatin Capsule No. 1, product of Lilly Co.), followed by curing for 1 hour or longer. After curing, the whole is placed in water to dissolve the gelatin capsule, whereby a capsule-shaped cured adhesive mass with particles dispersed therein is obtained. The cured adhesive mass is cooled in liquefied nitrogen and, in this further hardened state, it is cleaved by means of a cutter edge put thereon and struck with a rubber hammer. Some particles dispersed in the cured mass are found also in a cleaved state on the cleaved adhesive mass section, so that the particle inside can be observed. The black or white dots found in Fig. 4 and Fig. 6 are air bubbles entrained into the adhesive on the occasion of kneading with the twin pack adhesive for sample preparation.

Comparison between Fig. 1 and Figs 3 and 5 reveals that the spherical polymer powder obtained by the production process of the invention has a large number of pores with an inside diameter of about 15 to 20 μm (about 7.5 to 10% of the particle diameter) as formed on the particle surface (Fig. 1). On the contrary, no such pores are found on the surface of resin particles obtained by the conventional production process (Fig. 3 or Fig. 5). Further, comparison between Fig. 2 relative to Example 1 and Figs. 4 and 6 relative to resin particles obtained by the conventional production processes reveals that a higher void content in the particle inside is seen in Fig. 2. This is presumably due to sufficient solvent evaporation from the particle inside in the production process of the invention.

Comparison between Fig. 1 and Figs 3 and 5 reveals that the spherical powder of the invention has a large number of pores with an inside diameter of about 15 to 20 μm (about 7.5 to 10% of the particle diameter) as formed on the particle surface (Fig. 1). On the contrary, no such pores are found on the surface of prior art resin particles (Fig. 3 or Fig. 5) which are different from the (meth)acrylic block copolymers. Further, comparison between Fig. 2 relative to Example 1 and Figs. 4 and 6 relative to prior art resin particles reveals that a higher void content in the particle inside is seen in Fig. 2. This is presumably due to sufficient solvent evaporation from the particle inside in the case of the spherical powder of the invention, with a reduction in residual solvent content in the particles.

INDUSTRIAL APPLICABILITY

The first aspect of the invention, which has the constitution described hereinabove, can give polymer powder particles close to a nearly sphere in shape, small in particle diameter and high in flowability and therefore suited for use as a molding material in a simple and easy manner and can provide a process advantageous from the production process viewpoint.

Furthermore, the polymer powder particles obtainable by this production process are excellent in flowability and moldability and therefore can properly be used as a molding material for various purposes and further can suitably be used also as toners.

The (meth) acrylic block copolymer-based powder particles according to the second aspect of the invention are excellent in flowability and moldability and therefore can properly be used as a molding material for various purposes and further can suitably be used also as toners.

BRIEF DESCRIPTION OF THE DRAWINGS

[Fig. 1] This is a photomicrograph of spherical powder particles of a (meth) acrylic block copolymer obtained by the production process according to the invention.

[Fig. 2] This is a photomicrograph showing, in section, the spherical powder particle inside of a (meth)acrylic block copolymer particles obtained by the production process according to the invention.

[Fig. 3] This is a photomicrograph of polyvinyl chloride particles obtained by suspension polymerization.

[Fig. 4] This is a photomicrograph showing, in section, the particle inside of polyvinyl chloride particles obtained by suspension polymerization.

[Fig. 5] This is a photomicrograph of polyurethane particles obtained by reacting in a liquid-liquid dispersion system.

[Fig. 6] This is a photomicrograph showing, in section, the inside of polyurethane particles obtained by reacting in a liquid-liquid dispersion system.

[Fig. 7] This is a schematic representation illustrating the methods of measuring the angle of repose and the apparent specific gravity.
[Fig. 8] This is a schematic representation of a funnel-like metal vessel to be used in ICI flow measurements.

## Claims

1. A process for producing spherical polymer powders, which comprises the step of heating an aqueous dispersion comprising a solution of a polymer dissolved in a solvent, water and a dispersant with stirring under conditions such that the power per unit volume of the dispersion, P/V, amounts to at least 0.2 $kW/m^3$ to thereby remove the solvent from the aqueous dispersion.

2. The process according to Claim 1 wherein the temperature in the above-mentioned step of heating is not lower than 70˚C but lower than 160˚C.

3. The process according to Claim 1 or 2 wherein the heating is carried out by blowing steam into the aqueous dispersion and the solvent is removed from the aqueous dispersion in the manner of steam stripping.

4. The process according to any one of Claims 1 to 3 which further comprises the step of separating a spherical polymer powder from the aqueous dispersion containing the resulting spherical polymer powder by using the technique of filtration, centrifugation or sedimentation.

5. The process according to any one of Claims 1 to 4 wherein at least one dispersant selected from the group consisting of methylcellulose, polyvinyl alcohol, calcium phosphate, calcium carbonate and nonionic surfactants is used as the dispersant.

6. The process according to any one of Claims 1 to 5 wherein the polymer has a glass transition temperature of 30 to 150˚C.

7. The process according to any one of Claims 1 to 6 wherein the polymer is a thermoplastic resin.

8. The process according to Claim 7 wherein the thermoplastic resin is selected from among (meth)acrylic polymers, (meth)acrylic copolymers and isobutylene-based polymers.

9. The process according to any one of Claims 1 to 8 wherein the polymer solution contains inorganic particles.

10. A spherical polymer powder obtained by the process according to any one of Claims 1 to 9 wherein at least 90% of the total number of powder particles have an aspect ratio, expressed as the ratio between the small diameter and large diameter of each particle, of 1 to 2 and the average particle diameter is not smaller than 1 μm but smaller than 1,000 μm.

11. The spherical polymer powder obtained by the process according to any one of Claims 1 to 9 which has, on the particle surface thereof, small pores with an inside diameter corresponding to 1 to 50% of the particle diameter.

12. A spherical powder comprising a (meth) acrylic block copolymer.

13. The spherical powder according to Claim 12 wherein the (meth)acrylic block copolymer is a (meth)acrylic block copolymer (A) comprising a methacrylic polymer block (a) and an acrylic polymer block (b).

14. The spherical powder according to Claim 12 or 13 wherein at least 90% of the total number of powder particles have an aspect ratio, expressed as the ratio between the small diameter and large diameter of each particle, of 1 to 2 and the average particle diameter is not smaller

than 1 μm but smaller than 1,000 μm.

**15.** The spherical powder according to any one of Claims 12 to 14 which has, on the particle surface thereof, small pores with an inside diameter corresponding to 1 to 50% of the particle diameter.

**16.** The spherical powder according to any one of Claims 12 to 16 which further contains a filler and/or an additive.

Fig. 1

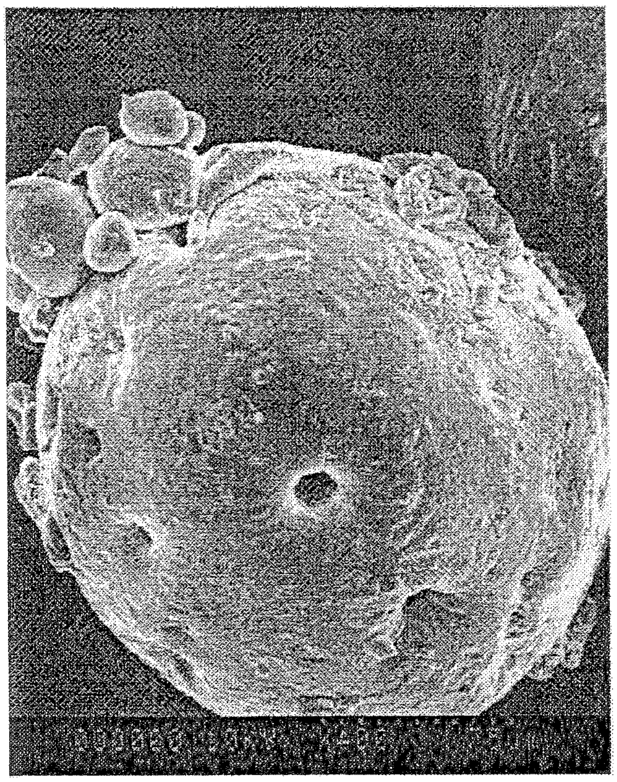

Fig. 2

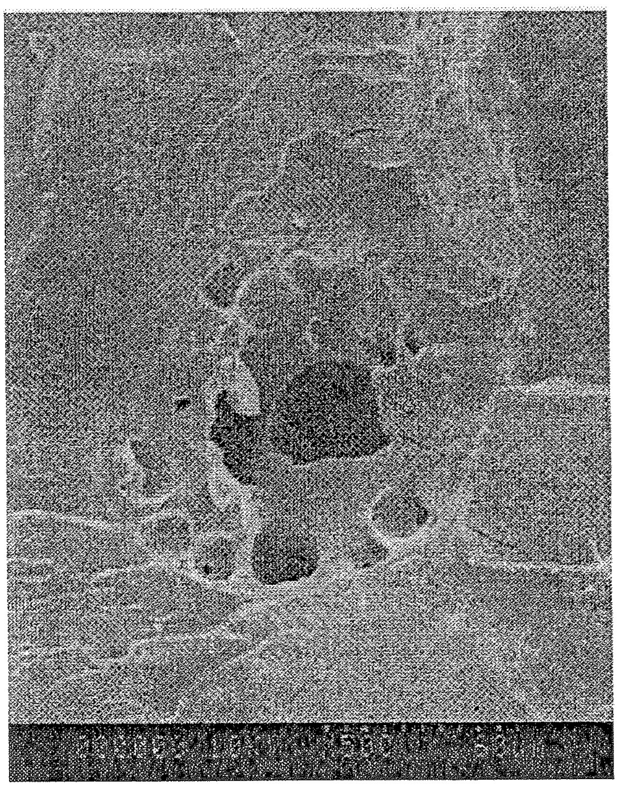

Fig. 3

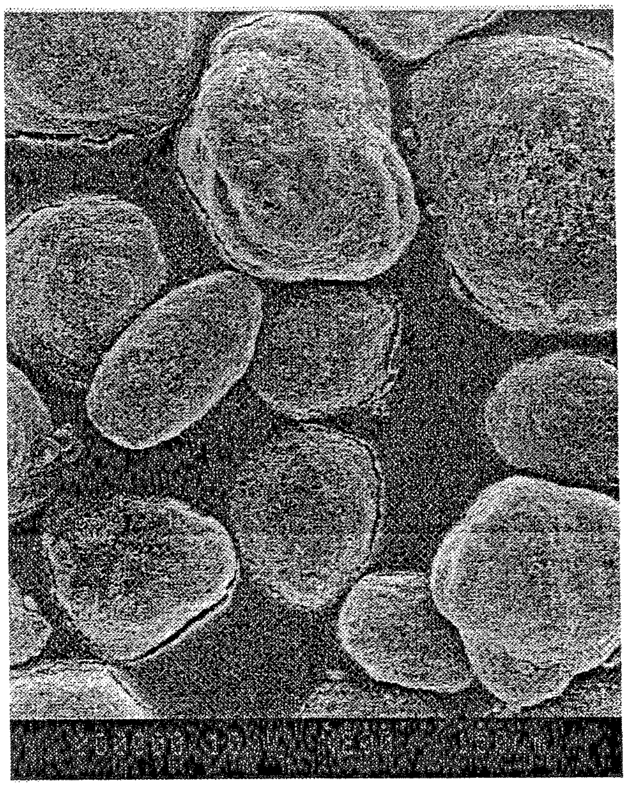

Fig. 4

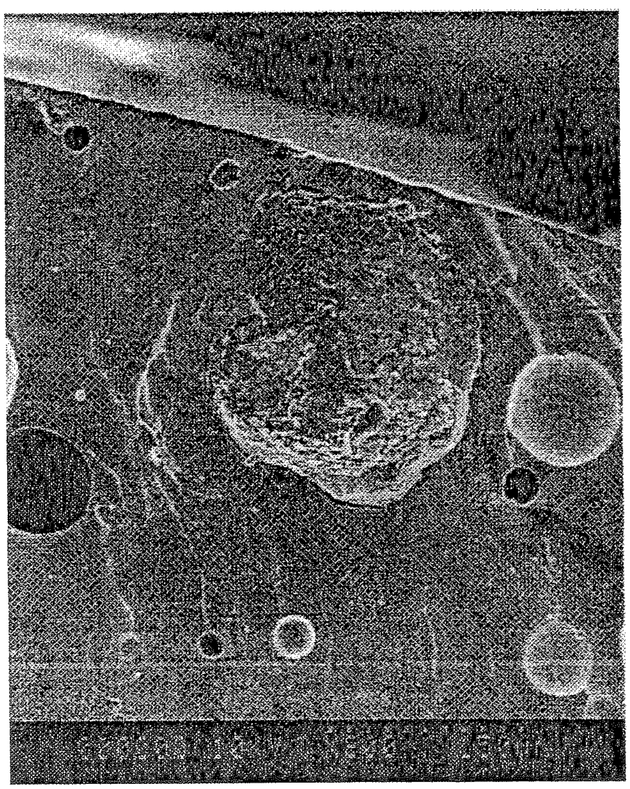

Fig. 5

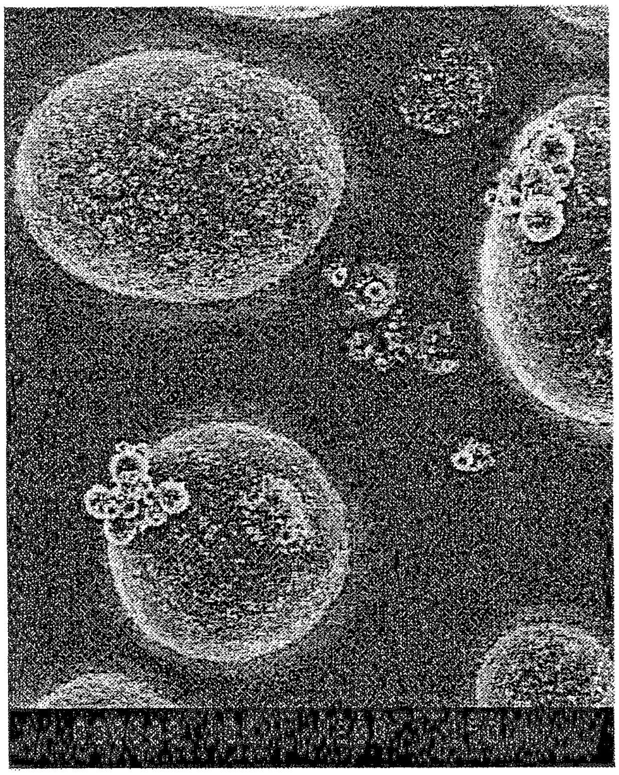

Fig. 6

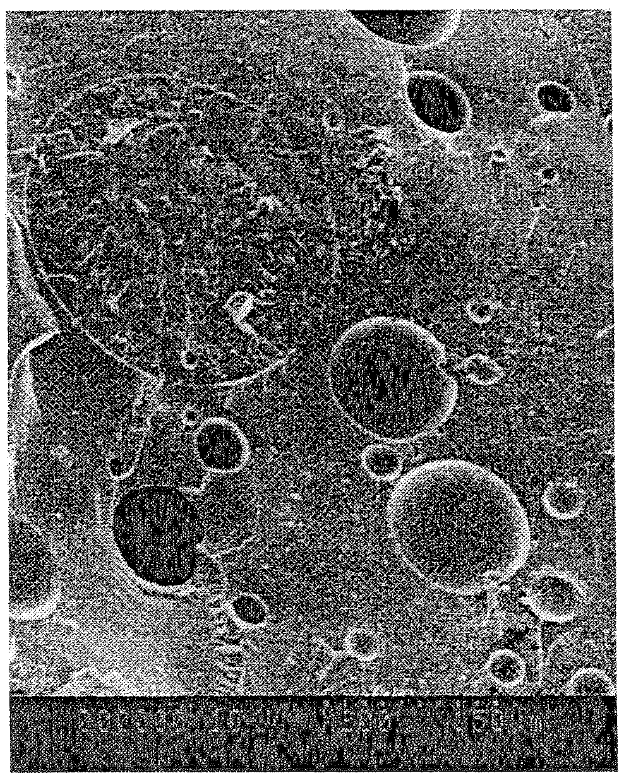

Fig. 7

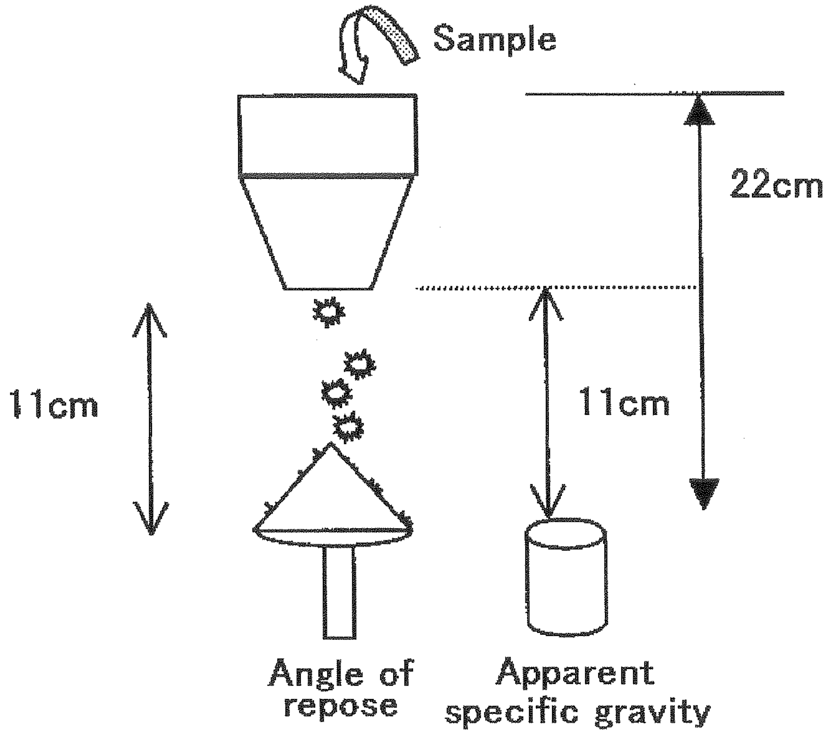
Sample
22cm
11cm
11cm
Angle of repose
Apparent specific gravity

Fig. 8

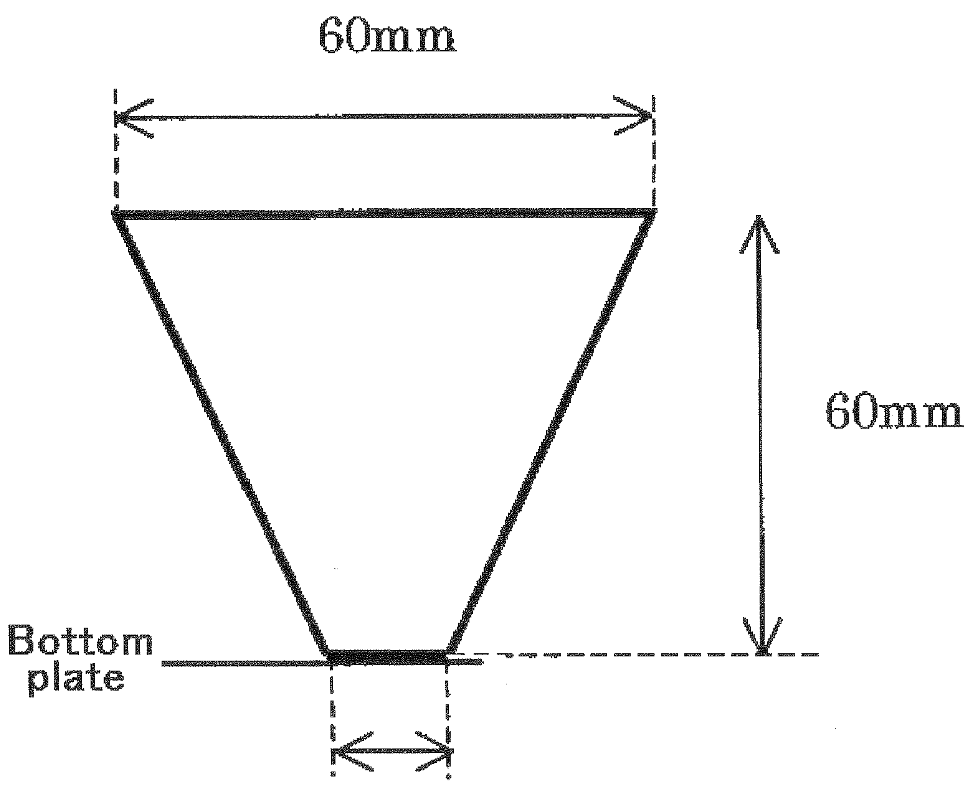
60mm
60mm
Bottom plate

## INTERNATIONAL SEARCH REPORT

International application No.
PCT/JP2006/302274

A. CLASSIFICATION OF SUBJECT MATTER
***C08J3/14***(2006.01)

According to International Patent Classification (IPC) or to both national classification and IPC

B. FIELDS SEARCHED

Minimum documentation searched (classification system followed by classification symbols)
C08J3/02-16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2004/041886 A1 (Kuraray Co., Ltd.),<br>21 May, 2004 (21.05.04),<br>Claim 1; page 15, lines 18 to 21<br>& EP 1580206 A1 | 12,13,16<br>1-11,14,15 |
| X<br>A | JP 2000-297156 A (Sanyo Chemical Industries, Ltd.),<br>24 October, 2000 (24.10.00),<br>Claims 6, 10<br>(Family: none) | 10<br>1-9,11-15 |
| X<br>A | EP 789047 A1 (NIPPON SYOKUBAI CO., LTD.),<br>13 August, 1997 (13.08.97),<br>Claims 1, 2, 11<br>& JP 2004-2891 A<br>Claims 1, 3<br>& US 6133193 A1 & WO 96/13542 A1 | 10<br>1-9,11-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 February, 2006 (23.02.06) | 07 March, 2006 (07.03.06) |
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 49053991 A
- JP 50090693 A
- JP 50089494 A
- JP 7082433 A
- JP 10030036 A
- JP 5279485 A
- JP 7133423 A
- JP 11116796 A
- JP 11256032 A
- JP 2000103957 A
- JP 2004269815 A
- JP 2004155880 A
- WO 2004041886 A
- JP 2000297156 A
- JP 10298248 A
- JP 2001234146 A
- JP 57502171 A
- JP 59006207 A
- JP 60215007 A
- WO 01083619 A

### Non-patent literature cited in the description

- Polymer Handbook. Wiley-Interscience, 1989
- *Journal of the American Chemical Society,* 1994, vol. 116, 7943
- *Macromolecules,* 1994, vol. 27, 7228
- **MATYJASZEWSKI et al.** *Journal of the American Chemical Society,* 1995, vol. 117, 5614
- *Macromolecules,* 1995, vol. 28, 7901
- *Science,* 1996, vol. 272, 866
- **SAWAMOTO et al.** *Macromolecules,* 1995, vol. 28, 1721